# EUROPEAN PATENT SPECIFICATION

(11) **EP 1 686 916 B1**
(45) Date of publication and mention of the grant of the patent: **18.11.2009**
(21) Application number: 03819165.6
(22) Date of filing: 19.12.2003
(51) Int. Cl.: A61C 13/097, A61C 11/06, A61C 19/05

(54) **METHOD FOR DEVELOPING BALANCED OCCLUSION IN DENTISTRY**
VERFAHREN ZUR ENTWICKUNG EINER AUSGEWOGENEN OKKLUSION IN DER ZAHNMEDIZIN
METHODE D'OCCLUSION EQUILIBREE EN DENTISTERIE

(30) Priority: 24.11.2003 US 720608
(43) Date of publication of application: 09.08.2006
(73) Proprietor: Global Impression Dental Trays, Inc., Tulsa OK 74114 (US)
(72) Inventor: MASSAD, Joseph, J., Tulsa, OK 74114 (US)
(74) Representative: Wood, Graham
(86) International application number: PCT/US2003/041010
(87) International publication number: WO 2005/060865

(56) References cited:
- EP-A- 0 162 991
- DE-C- 950 958
- DE-U- 1 451 729
- US-A- 853 984
- US-A- 1 367 477
- US-A- 2 183 512
- US-A- 3 422 535
- US-A- 3 793 728

## Description

### BACKGROUND OF THE INVENTION

### 1. Field of the Invention

This invention relates to a method for developing dental prosthetic occlusion coincident with centric relation at a predetermined occlusal vertical dimension. More specifically, this invention encompasses a method for forming dental prosthetic occlusal surfaces, the occlusal surfaces thus produced, unique mandibular posterior denture teeth used in the forming process, and a central bearing device complete with multiple bearing plates of specific geometric contour.

The unique mandibular posterior denture teeth have two components: a denture tooth base and an occlusal insert. Each denture tooth base is manufactured in suitable synthetic resin, i.e., acrylic resin, composite resin, or some combination of acrylic and composite resins. Each denture tooth base consists of an anatomic axial portion, a ridge lap portion, and an occlusal receptacle. Each occlusal insert is manufactured in a resilient polymer and is composed of an occlusal anatomic portion and a retentive projection. The occlusal anatomic portion of each occlusal insert has rudimentary occlusal anatomy and an accentuated central groove extending the entire mesial-distal dimension of the tooth. The retentive projection of each occlusal insert is designed to engage the occlusal receptacle of the associated denture tooth base. In this construct i.e., occlusal inserts attached to denture tooth bases, the mandibular posterior denture teeth and conventional anterior denture teeth may be positioned on a record base to form a trial denture.

A variety of routine prosthodontic procedures may be used during preliminary stages of complete denture construction. One such procedure involves making dental impressions of the edentulous maxillary and mandibular ridges so that dental casts can be generated. Record bases and wax occlusal rims are constructed on the casts and adjusted to fit specific clinical criteria. Next, a face bow record is made and used to mount the maxillary cast in a semi-adjustable dental articulator. A maxillomandibular record is then made and used to mount the mandibular cast in the articulator. A protrusive interocclusal record or lateral interocclusal records are made and used to adjust the condylar path elements of the articulator to better simulate true clinical conditions.

Next, anterior denture teeth are placed on the record bases and arranged in accordance with specific esthetic, phonetic, functional, and mechanical criteria. The mandibular posterior denture teeth i.e., a component of the present invention, are typically placed using a properly oriented occlusal plane guide of suitable curvature. The incorporation of an adequate compensating curve in the prosthetic occlusal plane will aid in development of occlusal balance. Finally, maxillary posterior denture teeth are placed on the record base, thereby completing construction of maxillary and mandibular trial complete dentures. The trial dentures are brought to the patient's mouth for evaluation. When judged acceptable, the trial dentures are processed to form definitive prostheses.

Following denture processing, and prior to recovering the dentures from the dental casts, the casts are returned to their mountings in the articulator. Once in the articulator, two records should be made: one relating the maxillary denture to the articulator and the other relating the mandibular denture to the maxillary denture. Next, dentures are recovered from the dental casts, finished, and polished. Remount casts are then constructed. Using the two records previously mentioned the maxillary and mandibular dentures are again mounted in a semi-adjustable dental articulator.

In order to maintain the predetermined occlusal vertical dimension, a central bearing device may be attached to the prostheses. First, the bearing pin support is attached to the mandibular denture. Next, the bearing plate support is attached to the maxillary denture using a jig that attaches between the bearing pin support and the bearing plate support. The jig is then removed and a bearing plate of specific geometric contour is selected and fastened to the bearing plate support. The specific geometric contour of the bearing plate may range from flat (i.e., representative of no horizontal or vertical overlap of the anterior denture teeth) to significantly concave (i.e., representative of substantial vertical overlap with minimal horizontal overlap of the anterior denture teeth).

A bearing pin bushing is threaded into one of three holes in the bearing pin assembly. For skeletal class III patients, the posterior-most hole will likely be used. Skeletal class II patients will usually require use of the anterior-most hole, while class I patients will most often use the middle hole. The position occupied by the bushing is dictated by the anterior-posterior maxillomandibular relationship. The bearing pin is then threaded through the bushing and adjusted to contact the bearing plate. Appropriate extension of the bearing pin is fixed with a lock nut. Next, the resilient occlusal inserts are removed from all mandibular denture tooth bases, and customized occlusal surfaces can be formed in their place.

To form new occlusal surfaces, different procedures may be used. The first procedure is accomplished in the dental laboratory. It involves forming the occlusal surfaces on the mandibular posterior denture teeth with the aid of the central bearing device. This procedure is referred to as the laboratory central bearing device technique. An appropriate, moldable, synthetic resin (i.e., light or chemically activated acrylic or composite resin) is prepared and applied to the tooth bases filling the occlusal receptacles and providing excess material that extends superior to the proposed occlusal plane. Maxillary denture teeth are lightly coated with a suitable lubricant and the articulator is closed submerging the cusp tips of the maxillary posterior teeth into the moldable resin. Next, the articulator is moved through all possible eccentric positions while maintaining contact between the central bearing pin and plate.

The occlusal morphology formed in the moldable resin on the mandibular posterior teeth is the result of articulator-determined movement dictated by angulations of the condylar housings (i.e., the posterior determinants of occlusion) and curvature of the central bearing plate (i.e., the anterior determinant of occlusion). The specific geometric contour of the bearing plate may range from flat (i.e., representative of no vertical overlap of the anterior denture teeth) to significantly concave (i.e., representative of substantial vertical overlap with potentially minimal horizontal overlap of the anterior denture teeth). Although the central bearing plate will normally be concave centrally, in some rare cases may need to be convex. The normal range of angle of curvature for the central bearing plate 86 will be in the range of 0 to 50 degrees, but if the curvature needs to be convex to match the physiology of the patient's mouth 140, the angle of curvature of the central bearing plate 86 may be a negative value.

Once complete polymerization has occurred, excess moldable resin is trimmed from the mandibular denture. The dentures are removed from the articulator with the central bearing device still attached and placed in the patient's mouth. Standard procedures for clinical evaluation of the prostheses are accomplished. Adjustments are made as indicated. When the dentures are judged clinically acceptable, the central bearing device is removed, the dentures are polished, and the restorations are provided to the patient.

A second procedure involves forming the new, customized occlusal surfaces directly in the patient's mouth. This procedure is referred to as the intraoral technique. The processed dentures with mounted central bearing device are placed in the patient's mouth and evaluated for fit and form. Adjustments are made as indicated. An appropriate, moldable, synthetic resin, i.e. light or chemically activated acrylic or composite resin, is prepared and applied to the tooth bases filling the occlusal receptacles and providing excess material that extends superior to the proposed occlusal plane. Maxillary denture teeth are lightly coated with a suitable lubricant. The patient is instructed to close bringing the central bearing pin into contact with the plate and submerging the cusp tips of the posterior maxillary denture teeth into the moldable resin. Next, the patient is instructed to move the mandible through all possible eccentric positions while maintaining contact between the central bearing pin and plate.

The occlusal morphology formed in the moldable resin on the mandibular posterior teeth is the result of patient-determined movement of the maxillary denture teeth relative to the mandibular teeth. The posterior determinants of occlusion and curvature of the central bearing plate (i.e., the anterior determinant of occlusion) play key roles in the occlusal morphology formed on the mandibular posterior denture teeth. The specific geometric contour of the bearing plate may range from flat (i.e., representative of no vertical overlap of the anterior denture teeth) to significantly concave (i.e., representative of substantial vertical overlap with potentially minimal horizontal overlap of the anterior denture teeth). Once complete polymerization has occurred, excess moldable resin is trimmed from the mandibular denture. When the dentures are judged clinically acceptable, the central bearing device is removed, the dentures are polished, and the restorations are provided to the patient.

A third technique for forming the occlusal surfaces on the mandibular posterior denture teeth uses the articulator's anterior guide pin and adjustable anterior guide table to dictate lateral movements of the dentures. This technique is accomplished in the dental laboratory and is referred to as the laboratory anterior guide pin technique. Once the dentures have been processed, recovered, finished, polished, and remounted in a semi-adjustable articulator, the articulator's anterior guide pin is adjusted to contact the anterior guide table at the predetermined occlusal vertical dimension.

If a mechanical anterior guide table is used, appropriate adjustments should be made. With the condylar path elements unlocked, the articulator is moved in a straight protrusive direction bringing the anterior denture teeth into an edge-to-edge relationship. The anterior guide table is unlocked, rotated superiorly to reestablish contact with the anterior guide pin, and locked. Next, the articulator is manipulated into a right working alignment of the posterior teeth. The right lateral wing of the anterior guide table is unlocked, rotated superiorly to reestablish contact with the anterior guide pin, and locked. This procedure is repeated to adjust the left lateral wing of the anterior guide table.

Rather than using a mechanical anterior guide table, it is possible to construct a custom anterior guide table using the spherical end of the anterior guide pin and a moldable resin material. Once anterior guidance has been established in the articulator, formation of the occlusal surfaces on the mandibular posterior teeth may be accomplished. An appropriate, moldable, synthetic resin, i.e. light or chemically activated acrylic or composite resin, is prepared and applied to the tooth bases filling the occlusal receptacles and providing excess material that extends superior to the proposed occlusal plane. Maxillary denture teeth are lightly coated with a suitable lubricant and the articulator is closed, submerging the cusp tips of the maxillary posterior teeth into the moldable resin. Next, the articulator is moved through all possible eccentric positions while maintaining contact between the anterior guide pin and the anterior guide plate.

The occlusal morphology formed in the moldable resin on the mandibular posterior teeth is the result of articulator-determined movement of the maxillary teeth. Once complete polymerization has occurred, excess moldable resin is trimmed from the mandibular denture. The dentures are removed from the articulator. Standard procedures for clinical evaluation of the prostheses are accomplished. Adjustments are made as indicated. When the dentures are judged clinically acceptable, the dentures are polished and provided to the patient.

Procedures described thus far result in synthetic resin, custom dental occlusal surfaces for mandibular posterior prosthetic teeth. Slight modification of laboratory and intraoral techniques already presented permit construction of metal occlusal surfaces possessing similar morphologic, anatomic, and physiologic characteristics. Rather than producing definitive occlusal surfaces during the forming process, the objective of the modified technique is to produce three dimensional patterns of the occlusal surfaces in preparation for metal casting processes. A wide variety of commonly used synthetic resin and wax pattern materials may be applied to the mandibular denture tooth bases in similar fashion as previously described for definitive moldable synthetic resin. Relative maxillomandibular movement is accomplished through all possible eccentric positions while maintaining contact between the central bearing pin or anterior guide pin and respective bearing surfaces. Upon completion of the forming process, excess moldable material is eliminated for the mandibular denture. The occlusal patterns are removed from the denture tooth bases en bloc or duplicated using a standard impression or indexing method. Occlusal patterns are then invested, cast in a dental metal alloy, finished, and polished. The metal occlusal surfaces are attached to the denture tooth bases using standard resin processing or luting techniques.

### 2. Description of the Related Art

Dentistry has made great strides in the development of devices and methods to construct satisfactory removable dental prostheses. However, modern prostheses so constructed are not without problems.

Problems may arise due to inaccurate contact between the maxillary and mandibular denture teeth. Predictable retention of complete dentures in the patient's mouth is possible only in the presence of efficient and accurate denture occlusion. Most denture wearers consciously or subconsciously perform random, empty-mouth, occlusal contacts throughout the day. These random occlusal contacts may be due to functional activity, (e.g., swallowing) or parafunction (e.g., bruxism or clenching). Developing smooth, bilaterally balanced occlusion will minimize the adverse consequences of functional and parafunctional loading by widely distributing force to the denture bearing structures. Therefore, effective occlusal balance will serve to dampen potentially detrimental occlusal forces acting to disrupt denture stability and dislodge dentures from their foundations.

Successful balanced occlusion is dependent on effective clinical and laboratory procedures. Accurate and precise registration of maxillomandibular relationships, meticulous articulation of dental casts, careful positioning and adjustment of manufactured denture teeth, and correct processing of dentures must be accomplished. Modifying currently available denture teeth to establish balanced occlusion and accommodate a wide variety of clinical situations is both technically challenging and time consuming. Unfortunately, even the best efforts to achieve balanced occlusion yield suboptimal results.

Another problem relates to the frequent disparity between ideal esthetic positioning of denture teeth, as compared to optimal mechanical positioning for balanced occlusion. Maxillary and mandibular anterior denture teeth positioned for the best esthetic result, may demonstrate inadequate horizontal and/or vertical overlap to permit establishing sound balanced occlusion using currently available posterior denture teeth.

Several problems are associated with need to contact oral soft tissues upon placement of conventional removable dental prostheses. Since oral soft tissues are displaceable, slight to moderate movement of the prostheses during normal function is expected. This movement may complicate denture stability, retention and support. If substantial, movement of the prostheses may impact occlusal stability, decrease masticatory efficiency, compromise esthetics, contribute to irritation of oral tissues, adversely affect phonation, and ultimately lead to patient dissatisfaction.

The present invention addresses these problems by providing a method of forming the occlusal surfaces of mandibular posterior denture teeth employing an adjustable central bearing device with bearing plates of specific geometric contour. Rather than unsuccessfully adapting or modifying commercially available denture teeth to conditions that vary from patient to patient, the present invention permits custom formation of occlusal surfaces compatible with conditions recorded from the patient during routine complete denture therapy. Formation of the mandibular posterior occlusal surfaces, as previously described, is conveniently carried out in the laboratory, i.e. the laboratory technique. However, the invention is not limited in this regard. Mandibular posterior occlusal surfaces may also be formed directly in the patient's mouth, i.e. the intraoral technique.

Use of a central bearing device will significantly reduce anticipated denture movement and greatly facilitating both the laboratory technique and the intraoral technique. If the occlusal surfaces are formed using the laboratory technique, subsequent evaluation of the definitive denture occlusion in the patient's mouth is made less cumbersome and more accurate when the occlusal device remains attached to the dentures. If the occlusal surfaces are formed using the intraoral technique, presence of the occlusal device serves to stability the maxillary and mandibular dentures during the formation process. Additionally, the occlusal device permits maintenance of a predetermined occlusal vertical dimension in both the intraoral and laboratory techniques.

One object of the present invention is to provide a method for creating dental prostheses that are attractive, comfortable, and functionally efficient.

Another object of the present invention is to provide a method by which prosthetic dental occlusion may be constructed demonstrating optimal balance through all eccentric mandibular positions.

Still another object of the present invention is to provide a method for constructing complete dentures that demonstrate optimal retention and stability in the patient's mouth.

Specific examples of prior art are Laszlo (IL83447) which relates to a method of making endibular dentures having a plurality of hollow posterior teeth. Worthington (US6008481) discloses the preparation of a temporary crown and a natural tooth with a number of apertures formed therein.

### SUMMARY OF THE INVENTION

In a first aspect of the invention there is provided a method for establishing balanced occlusion in dentistry comprising;
installing at least one special tooth as posterior teeth in one denture of a dental prosthesis with each special tooth provided with a receptacle that opens in the direction of opposing teeth an undercut area in the receptacle, characterised by the steps of
installing the denture in identical physical relationship to the physiology of the patient's mouth for whom the dental prosthesis is being created,
inserting synthetic resin into the receptacle and the undercut area of each of the special teeth in excess of the amount needed to completely fill the receptacle, installing a central bearing device to the denture so that the central bearing device holds the denture the proper distance apart from the opposing teeth for the physiology of the patient's mouth and allows the denture to move relative to the opposing teeth at an orientation that matches movement created by the physiology of the patient's mouth;
closing the denture while holding the denture the proper distance apart from the opposing teeth for the physiology of the patient's mouth and moving the denture in all eccentric positions relative to the opposing teeth at an orientation that matches movement created by the physiology of the patient's mouth to mold the resin into mating occlusal surfaces for the special teeth by using the opposing teeth as a molding instrument;
allowing the resin to cure, and trimming excess resin from the special teeth.

The present invention is a method for forming balanced dental prosthetic occlusion that is coincident with centric relation at a predetermined occlusal vertical dimension. This invention encompasses a method of forming occlusal surfaces, the occlusal surfaces thus produced, unique mandibular posterior denture teeth used in the process, and a central bearing device complete with multiple bearing plates of specific geometric form. Specifically, the unique mandibular posterior denture teeth, composed of a resin denture tooth base and a resilient occlusal insert, are positioned in the mandibular complete denture using standard techniques. Following processing and recovery, the definitive maxillary and mandibular dentures are remounted on a semi-adjustable articulator and a central bearing device is attached. The bearing pin adjusted to contact a bearing plate of specific geometric contour.

The resilient occlusal inserts are then removed from all mandibular denture tooth bases, and customized occlusal surfaces can be formed using one of three procedures or techniques. The first two procedures involve forming the occlusal surfaces in the laboratory, i.e. the laboratory technique employing central bearing device and the laboratory technique employing anterior guide pin. The third technique involves forming the occlusal surfaces directly in the patient's mouth i.e., the intraoral technique.

For all three techniques, an appropriate, moldable, synthetic resin is applied to the mandibular posterior denture tooth bases. With the central bearing pin in contact with the plate, or an anterior incisal pin in contact with the table, relative motion between the maxillary and mandibular dentures is initiated either using manual articulator movements via one of the laboratory techniques or using patient-direct mandibular movement via the intraoral technique. Mandibular denture tooth occlusal morphology forms as the cusp tips of maxillary posterior teeth move through and mold the unpolymerized resin. Once complete polymerization occurs, excess resin is trimmed and standard procedures for clinical evaluation are accomplished. When the dentures are judged clinically acceptable, the central bearing device is removed, the dentures are polished, and the restorations are provided to the patient.

In a further aspect of the invention there is provided a combination for use in dentistry comprising:
a special tooth for insertion into a dental prosthesis, said tooth provided with sides to form a receptacle located centrally between the sides and at least once undercut area in the receptacle;
moldable resin filling the receptacle and the undercut area which cures to a solid to form an occlusal surface of the special tooth, means to establish vertical spacing between a maxillary and mandibular of said dental prosthesis with a central bearing device so that the contour of said occlusal surface conforms to and can be molded by interaction with opposing teeth.

### BRIEF DESCRIPTION OF THE DRAWINGS

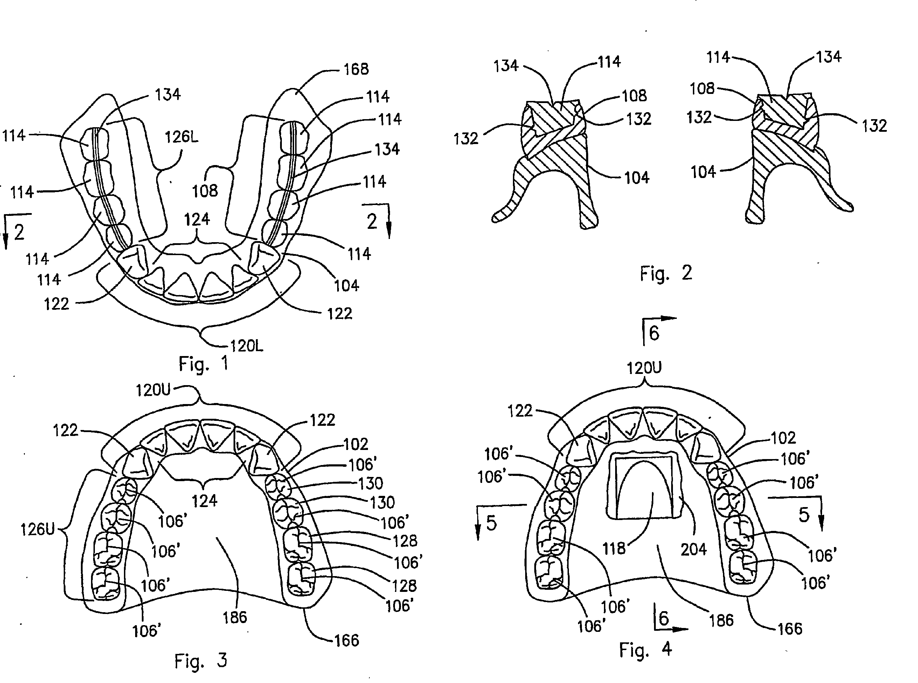

FIGURES 1 through 18 illustrate use of the present method to construct dentures using a central bearing device. FIGURE 1 is an occlusal view (horizontal plane) of a mandibular complete denture with occlusal inserts attached to unique posterior denture teeth. These unique mandibular posterior denture teeth are employed in a method for developing balanced occlusion in dentistry according to the preferred embodiment of the present invention.
FIGURE 2 is a cross section view (frontal plane) of the mandibular complete denture illustrated in Figure 1 taken along line 2-2, with occlusal inserts in the unique posterior denture teeth. This view demonstrates resilient retentive projections extending from the occlusal inserts into the receptacle portion of the denture tooth base. For retention purposes, the occlusal inserts engage circumferential grooves along the axial walls of the receptacle portion of the denture tooth bases.
FIGURE 3 is an occlusal view (horizontal plane) of the maxillary complete denture that occludes with the prosthesis illustrated in Figure 1. This maxillary denture incorporates commercially available anatomic denture teeth.
FIGURE 4 is an occlusal view (horizontal plane) of the maxillary complete denture illustrated in Figure 3 with a central bearing plate assembly attached to the cameo surface of the palate using a suitable resin, wax or adhesive and a bearing plate of specific curvature in place on the central bearing plate assembly.

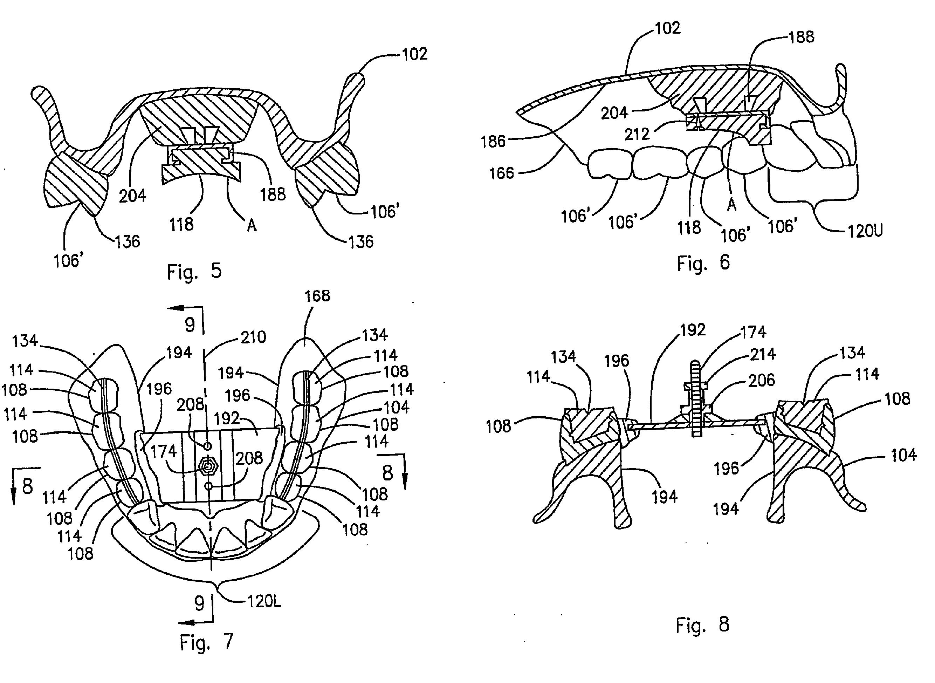

FIGURE 5 is a cross section view (frontal plane) of the maxillary complete denture illustrated in Figure 4 taken along line 5-5.
FIGURE 6 is a cross section view (mid-sagittal plane) of the maxillary complete denture illustrated in Figure 4 taken along line 6-6.
FIGURE 7 is an occlusal view (horizontal plane) of the mandibular complete denture illustrated in Figure 1 with occlusal inserts placed in the unique posterior denture teeth and a suitable resin, wax or adhesive used to attach a central bearing pin assembly across the tongue space of the denture.
FIGURE 8 is a cross section view (frontal plane) of the mandibular complete denture illustrated in Figure 7 taken along line 8-8.

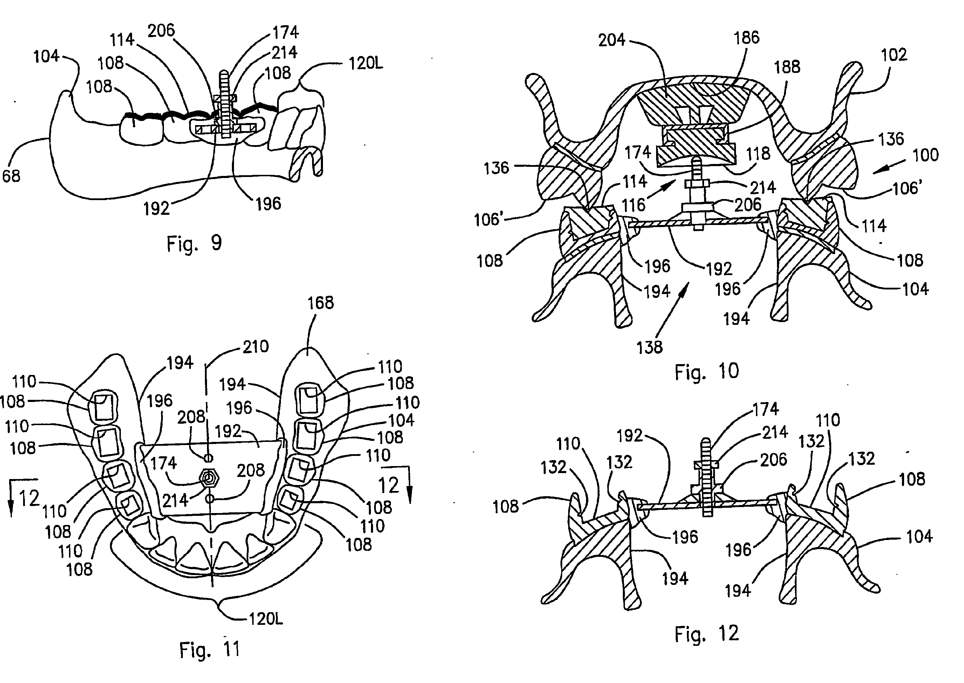

FIGURE 9 is a cross section view (mid-sagittal plane) of the mandibular complete denture illustrated in Figure 7 taken along line 9-9.
FIGURE 10 is cross section view (frontal plane) of the maxillary complete denture illustrated in Figure 4 and the mandibular complete denture illustrated in Figure 7 shown properly occluded at a predetermined occlusal vertical dimension with the central bearing pin adjusted to contact the central bearing plate and the pin lock nut tightened to secure the pin in position.
FIGURE 11 is an occlusal view (horizontal plane) of the mandibular complete denture illustrated in Figure 7 shown with the occlusal inserts removed from the unique mandibular posterior denture teeth to expose empty receptacles in the denture tooth bases and with the length of the central bearing pin remaining adjusted and secured as shown in Figure 10.
FIGURE 12 is a cross section view (frontal plane) of the mandibular complete denture illustrated in Figure 11 taken along line 12-12.

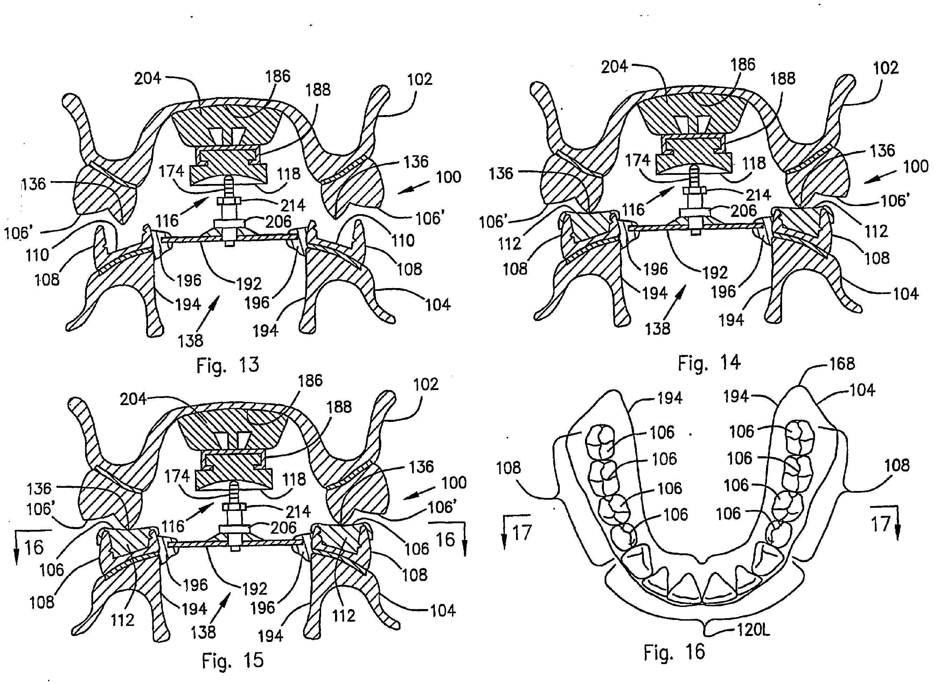

FIGURE 13 is cross section view (frontal plane) of the dentures of Figure 10, shown properly related at a predetermined occlusal vertical dimension and with the occlusal inserts removed from the unique mandibular posterior denture teeth to expose empty receptacles in the denture tooth bases ready to receive a moldable synthetic resin used to form new posterior occlusal surfaces.
FIGURE 14 is a cross section view (frontal plane) of the dentures of Figure 13 shown immediately following the occlusal surface forming process.
FIGURE 15 is a cross section view (frontal plane) of the dentures of Figure 14 after excess polymerized synthetic resin trimmed.
FIGURE 16 is an occlusal view (horizontal plane) of the definitive mandibular complete denture taken along line 16-16 of Figure 15 showing the denture after it has been finished and polished in preparation for clinical placement. Primary occlusal anatomy has been added to the newly formed posterior occlusal surfaces.

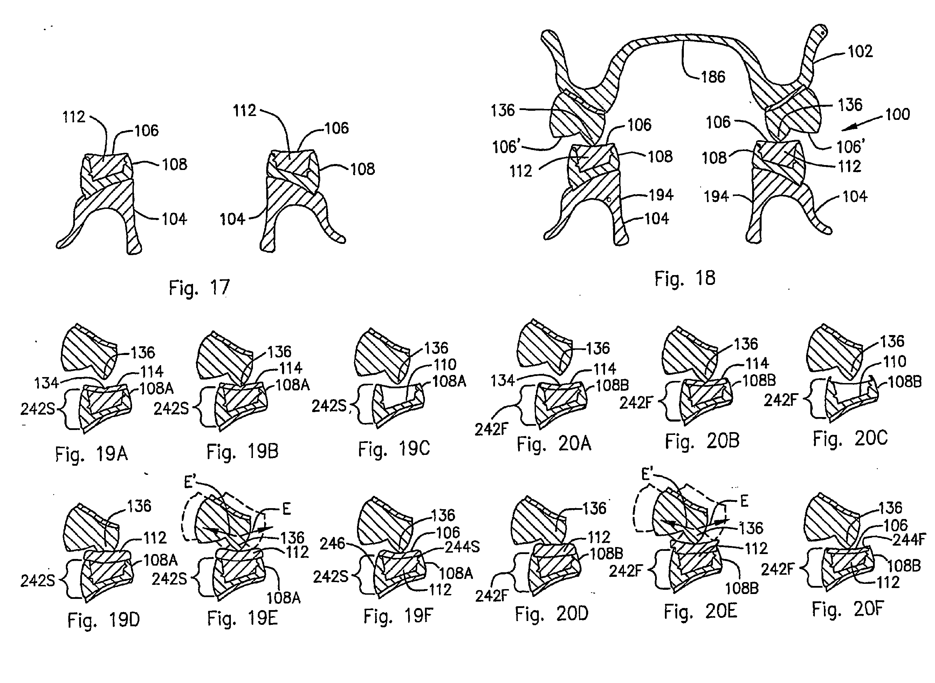

FIGURE 17 is a cross section view (frontal plane) of the definitive mandibular complete denture illustrated in Figure 16 taken along line 17-17.
FIGURE 18 is a cross section view (frontal plane) of the definitive maxillary and mandibular complete dentures of Figure 15 demonstrating custom formed mandibular posterior occlusal surfaces.
FIGURES 19 and 20 show two types of special teeth used in the present method. FIGURES 19A through 19F are cross section views (frontal plane) of a single, opposing set of posterior denture teeth showing a series of steps for using a conventional anatomic denture tooth to custom form the entire mandibular occlusal surface of a unique mandibular denture tooth according to a preferred embodiment of the present invention.
FIGURES 20A - 20F are cross section views (frontal plane) of a single, opposing set of posterior denture teeth showing a series of steps for using a conventional anatomic denture tooth to custom form only the central aspect of the mandibular occlusal surface of an alternate unique mandibular denture tooth according to an alternate embodiment of the present invention.

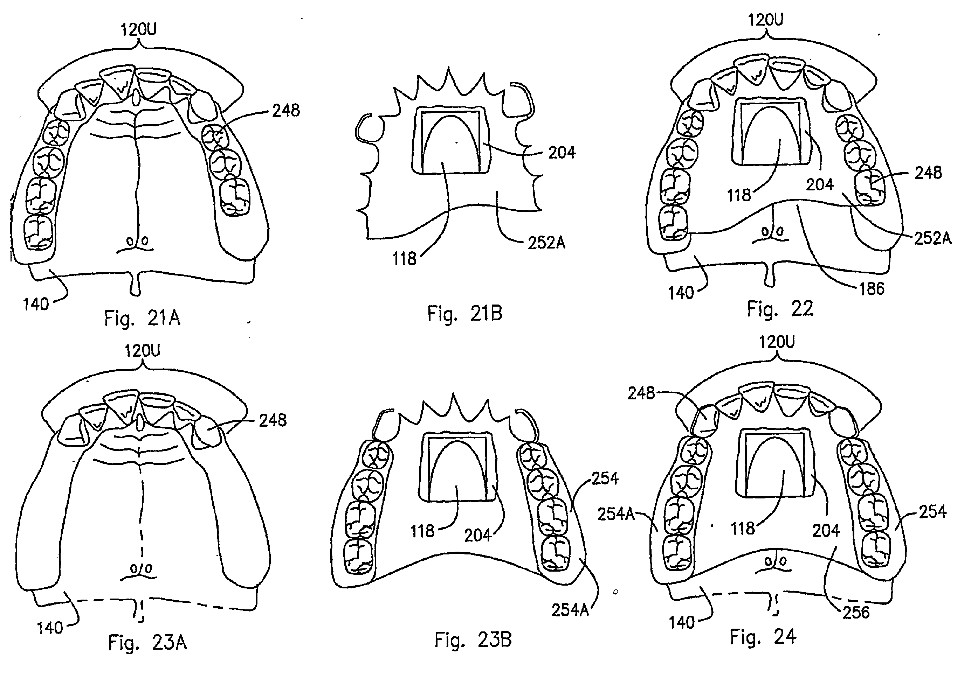

FIGURES 21 through 26 show various uses of the present method beyond use to make a full set of dentures. FIGURE 21A is an occlusal view (horizontal plane) of a maxilla with restored-natural dentition of a patient with mandibular edentulism.
FIGURE 21B is an occlusal view (horizontal plane) of a maxillary record base with attached central bearing plate assembly that was created for the maxilla of Figure 21A and incorporates clasps in the record base for improved stability and retention so that the occlusal morphology of the mandibular posterior denture teeth can be custom formed for the patient.
FIGURE 22 is an occlusal view (horizontal plane) of the maxillary record base with central bearing plate assembly of Figure 21B shown properly placed on the maxilla of Figure 21A
FIGURE 23A is an occlusal view (horizontal plane) of a maxilla with restored-natural dentition of a patient with partial mandibular edentulous.
FIGURE 23B is an occlusal view (horizontal plane) of a maxillary removable partial denture with attached central bearing plate assembly that was created for the maxilla of Figure 23A and incorporates clasps in the record base for improved stability and retention so that the occlusal morphology of the mandibular posterior denture teeth can be custom formed for the patient.
FIGURE 24 is an occlusal view (horizontal plane) of the maxillary removable partial denture with central bearing plate assembly of Figure 23B shown properly placed on the maxilla of Figure 21A.

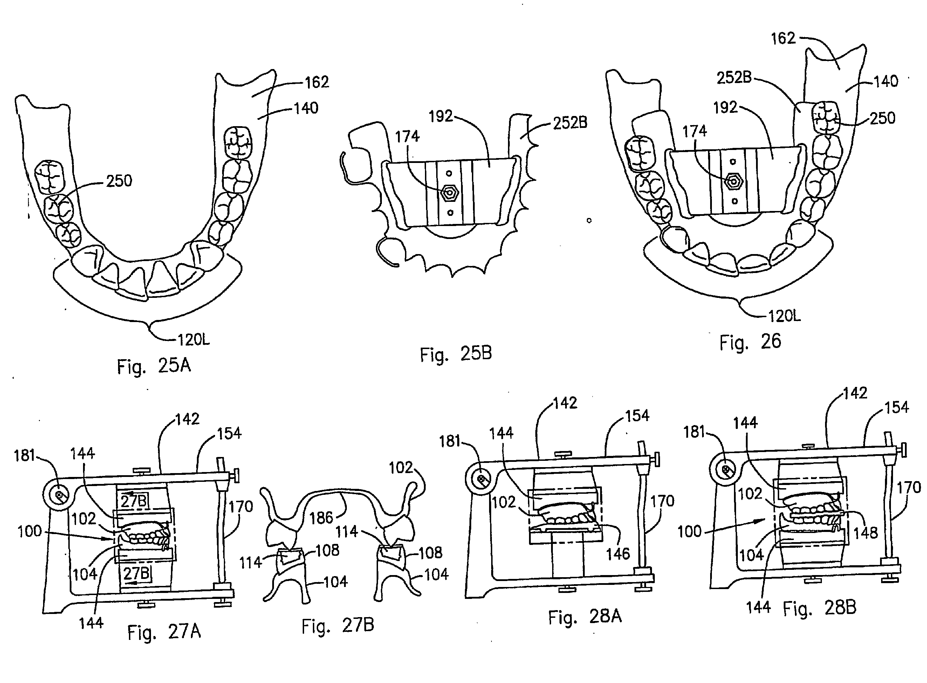

FIGURE 25A is an occlusal view (horizontal plane) of a mandible with restored-natural dentition of a patient with maxillary edentulism.
FIGURE 25B is an occlusal view (horizontal plane) of a mandibular record base with attached central bearing plate assembly that was created for the maxilla of Figure 25A and incorporates clasps in the record base for improved stability and retention so that the occlusal morphology of the mandibular posterior denture teeth can be custom formed for the patient.
FIGURE 26 is an occlusal view (horizontal plane) of the mandibular record base and central bearing plate assembly of Figure 25B shown properly placed on the maxilla of Figure 25A. A similar construction is possible if the patient is wearing a mandibular removable partial denture.
FIGURES 27 through 30 show the starting point for all three techniques for forming occlusal surfaces on the special teeth according to the present method. FIGURE 27A shows processed maxillary and mandibular complete dentures in occlusion mounted in an articulator on their corresponding master casts. The rectangular box surrounding the mounted master casts contains a cross sectional view (mid-sagittal plane) of the denture arrangement.
FIGURE 27B is a cross sectional (frontal plane) view of the complete dentures of Figure 27A in occlusion without master casts taken along line 27B-27B of Figure 27A. The maxillary conventional anatomic posterior denture teeth have been set-up opposing the unique mandibular denture teeth employed in a method for developing balanced occlusion in dentistry according to the preferred embodiment of the present invention.
FIGURES 28A - 28B illustrate construction of the maxillomandibular records necessary to remount the complete denture in an articulator following recovery of the complete denture from the master casts. Figure 28A illustrates construction of a maxillary remount record, and Figure 28B illustrates construction of a mandibular remount record.

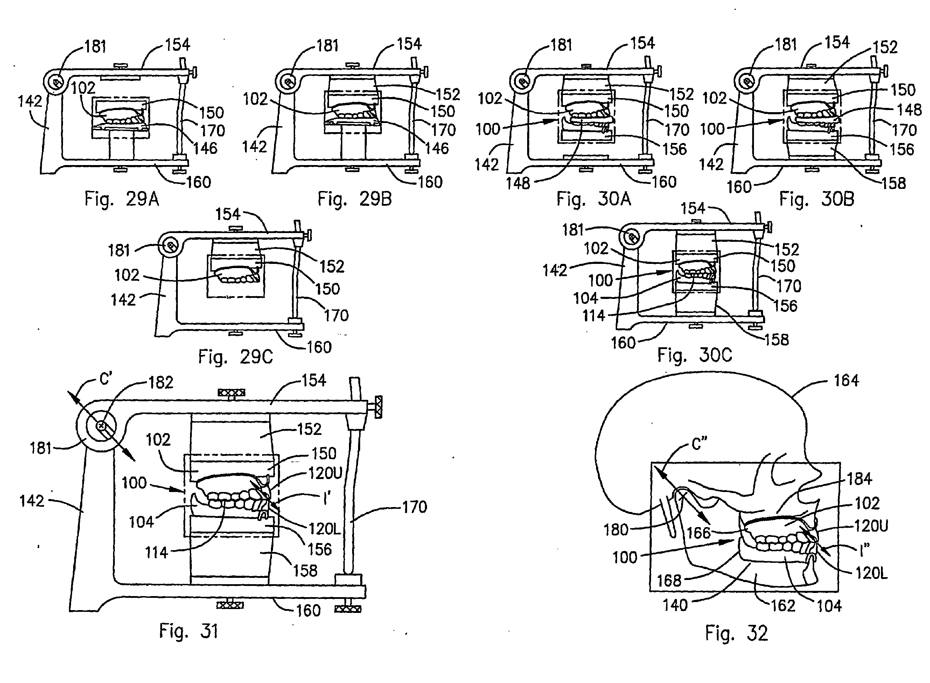

FIGURES 29A - 29B depict the process of remounting the maxillary complete denture in the articulator following recovery from the master cast and denture finishing procedures. Figure 29A shows the maxillary denture properly placed on a maxillary remount cast that has been generated and the denture articulated into the maxillary remount record. Figure 29B shows the maxillary remount cast being attached to the articulator using conventional cast mounting procedures. Figure 29C shows the maxillary remount record removed leaving the maxillary complete denture properly repositioned in the articulator.
FIGURES 30A - 30C depict the process of remounting the mandibular complete denture in the articulator following recovery from the master cast and denture finishing procedures. Figure 30A shows the mandibular denture properly placed on a mandibular remount cast that has been generated, the incisal pin of the articulator extended 2mm, and the denture articulated into the mandibular remount record. Figure 30B shows the mandibular remount cast being attached to the articulator using conventional cast mounting procedures. Figure 30C shows the mandibular remount record removed and the incisal pin returned to it zero setting resulting in a mandibular complete denture properly repositioned in the articulator.
FIGURES 31 through 36 show how the patients jaw and the articulator are related. FIGURE 31 illustrates the mechanical analogs of the anatomic determinates of posterior and anterior occlusal morphology. The heavy arrow passing through the articulator's axis represents the angle of eccentric movement permitted by the condylar housings of the articulator. These mechanisms, which are provided on both the left side and the right side of the articulator, represent the articulator's mechanical analog of the patient's posterior determinants of occlusal morphology or condylar eminences. The curved arrow between incisal edges of the complete dentures represents the anterior disocclusive angle. This angle is artificially established by the relative vertical and horizontal positioning of the anterior denture teeth. Once established, this angle represented the anterior determinant of occlusal morphology.
FIGURE 32 illustrates a lateral cross section view (mid-sagittal plane) of a patient wearing complete maxillary and mandibular dentures showing the anatomic determinates of posterior and anterior occlusal morphology. The heavy arrow passing through the patient's condyle represents the angle of eccentric movement permitted by the anatomy of the condylar eminences. The angles of the condylar eminences, which are provided on both the left side and the right side, represent the patient's posterior determinants of occlusal morphology. The curved arrow between incisal edges of the complete dentures represents the anterior disocclusive angle. This angle is artificially established by the relative vertical and horizontal positioning of the anterior denture teeth. Once established, this angle represented the anterior determinant of occlusal morphology.

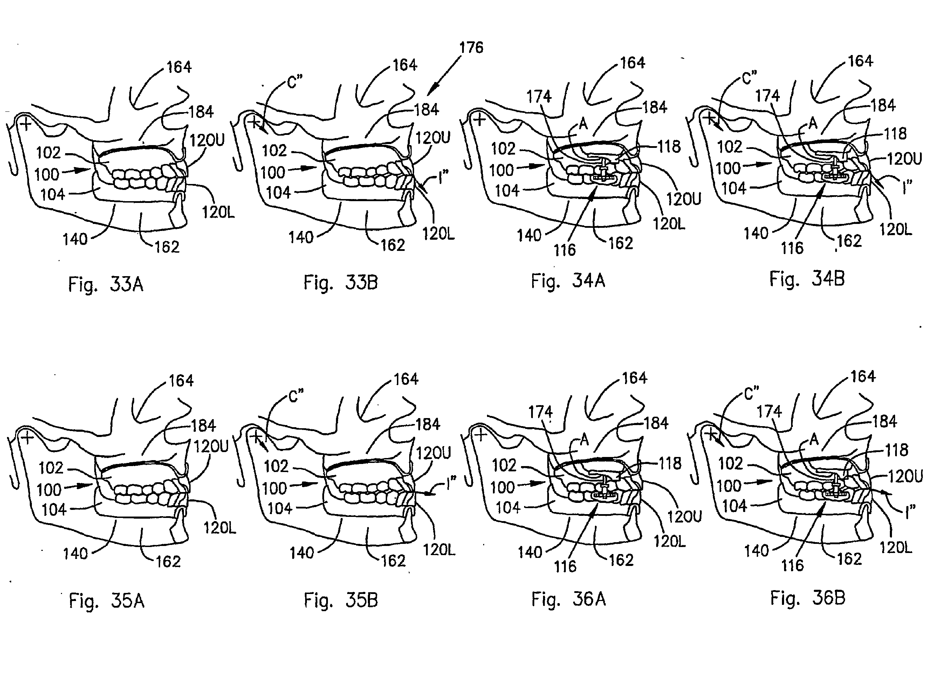

FIGURES 33A and 33B illustrate, respectively, maxillary and mandibular complete dentures in a normal resting position and with occlusal balance in protrusion due to geometric coordination between the anterior disocclusive angle, angles of the condylar eminences, and the posterior occlusal morphology.
FIGURES 34A and 34B illustrate the maxillary and mandibular complete dentures of Figures 33A and 33B, respectively, in a normal resting position and with occlusal balance in protrusion due to a central bearing device with a bearing plate of specific curvature. In order to incorporate the anterior determinant of occlusion into the process of forming custom mandibular posterior occlusal surfaces, the mandibular denture must move along predetermined eccentric angular paths relative to the maxillary denture. A central bearing device with a bearing plate of specific curvature must be in place to stabilized the mandibular denture and assure the appropriate trajectory of eccentric mandibular movements. The balanced denture occlusion resulting from formation of posterior occlusal surfaces in the patient's mouth, i.e. the intraoral technique, is dependant on the mandibular guidance provided by a central bearing device.
FIGURES 35A and 35B, respectively, illustrate another set of maxillary and mandibular complete dentures in a normal resting position and with occlusal balance in protrusion due to geometric coordination between the anterior disocclusive angle, angles of the condylar eminences, and the posterior occlusal morphology. These dentures are similar to the prostheses illustrated in Figure 33, but have less vertical overlap of the anterior teeth.
FIGURES 36A and 36B illustrate the set of maxillary and mandibular complete dentures of Figures 35A and 35B, respectively, in a normal resting position and with occlusal balance in protrusion due to a central bearing device with a bearing plate of specific curvature. In order to incorporate the anterior determinant of occlusion into the process of forming custom mandibular posterior occlusal surfaces, the mandibular denture must move along predetermined eccentric angular paths relative to the maxillary denture. A central bearing device with a bearing plate of specific curvature must be in place to stabilized the mandibular denture and assure the appropriate trajectory of eccentric mandibular movements. The balanced denture occlusion resulting from formation of posterior occlusal surfaces in the patient's mouth, i.e. the intraoral technique, is dependant on the mandibular guidance provided by a central bearing device. The central bearing plate used with these dentures is similar to the central bearing plate illustrated in Figures 34A and 34B, but this central bearing plate is flatter that the one depicted in Figures 34A and 34B.

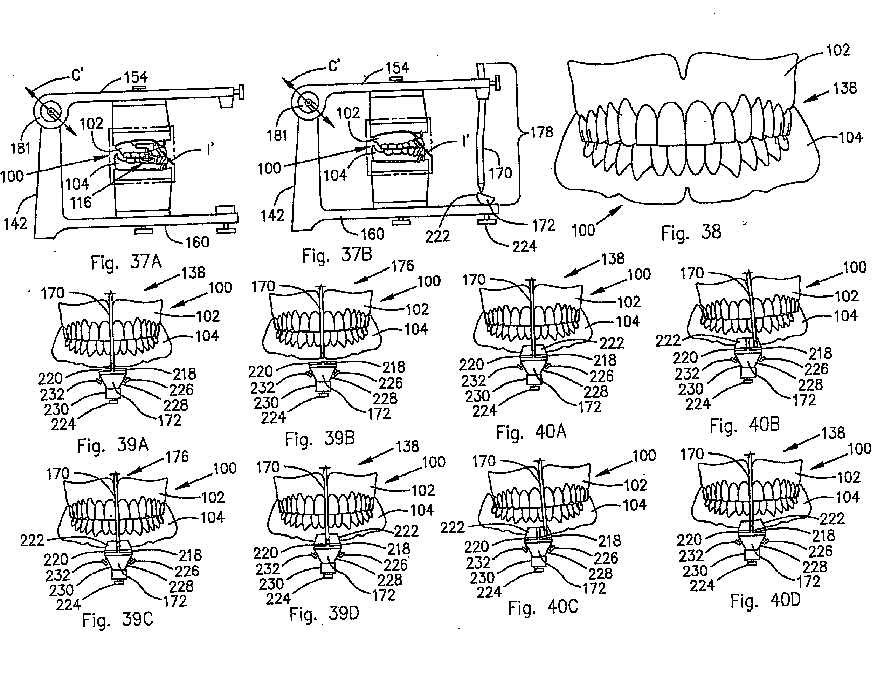

FIGURES 37A and 37B illustrate two alternate possible mechanical analogs of the anterior determinant of occlusion. Figure 37A shows a central bearing device used to direct eccentric mandibular movements corresponding to specific anterior disocclusive angles. Figure 37B shows use of appropriate adjustment of a mechanical incisal guide table or formation of a customized incisal guide table to produce articulator movements indicative of specific anterior disocclusive angles.
FIGURE 38 shows a completed set of dentures with inserts still in the special teeth prior to creation of the occlusal surfaces on the special teeth. FIGURE 38 shows a front view of a maxillary complete denture and a mandibular complete denture that will be used in Figures 39 - 44 to illustrate adjustment of a mechanical incisal guide table and formation of a customized incisal guide table. The mechanical and customized incisal guide tables may be used as mechanical analogs of the anterior disocclusive angle.
FIGURES 39 through 41 show adjustment of an incisal guide table. FIGURES 39A - 39D illustrates the steps necessary for adjustment of a mechanical incisal guide table. Figure 39A shows the dentures mounted in an articulator with the articulator in the centric relation position. Figure 39B shows the articulator manipulated from the centric relation position to edge-to-edge protrusion which causes the incisal pin to be elevated above the guide table. Figure 39C shows the guide table being elevated to contact the incisal pin and then locked in place. Figure 39D shows the articulator returned to the centric relation position.
FIGURE 40 illustrates continuation of the steps shown in Figures 39A through 39D necessary for adjustment of a mechanical incisal guide table. Figure 40A shows the articulator in the centric relation position. Figure 40B shows the articulator manipulated from the centric relation position into a right lateral excursion which causes the incisal pin to be elevated above the left wing of the guide table. Figure 40C shows the left wing of the guide table being elevated to contact the incisal pin and then locked in place. Figure 40D shows the articulator returned to the centric relation position.

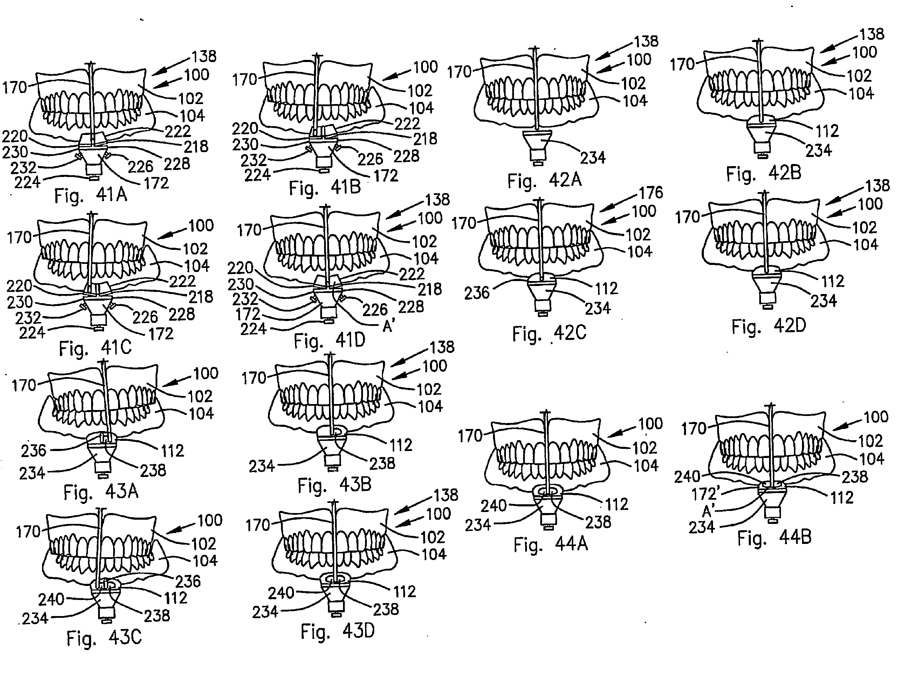

FIGURE 41 illustrates continuation of the steps shown in Figures 39A - 40D necessary for adjustment of a mechanical incisal guide table. Figure 41A shows the articulator in the centric relation position. Figure 41B shows the articulator manipulated from the centric relation position into a left lateral excursion which causes the incisal pin to be elevated above the right wing of the guide table. Figure 41C shows the right wing of the guide table being elevated to contact the incisal pin and then locked in place. Figure 41 D shows the articulator returned to the centric relation position. This completes adjustment of the mechanical guide table prior to occlusal surface forming.
FIGURES 42 through 44 illustrate the custom creating of an incisal guide table. FIGURES 42A - 43D illustrate the steps necessary for formation of a custom incisal guide table. Figure 42A shows the dentures mounted in an articulator and the incisal pin is raised approximately 2mm off of the incisal guide table. Figure 42B shows the articulator after it has been opened, had moldable synthetic resin placed on the incisal guide table, and then closed again so that the tip of the incisal guide pin is submerged into the moldable resin. Figure 42C shows the articulator manipulated from the centric relation position to edge-to-edge protrusion. Figure 42D shows the articulator is then returned to the centric relation position.
FIGURES 43A through 43D illustrate continuation of the steps shown in Figures 42A through 42D necessary for formation of a custom incisal guide table. Figure 43A shows the articulator manipulated from the centric relation position into a right lateral excursion. Figure 43B shows the articulated manipulated back to centric relation from the right lateral excursion. Figure 43C shows the articulator is then manipulated into a left lateral excursion. Figure 43D shows the articulator is returned back to the centric relation position.
FIGURES 44A and 44B illustrate continuation of the steps 42A - 43D necessary for formation of a custom incisal guide table. Figure 44A shows that all eccentric mandibular positions have been replicated using appropriate articulator movements resulting in complete molding of the incisal guide table. Figure 44B shows that excess resin is trimmed from the incisal guide table to complete the custom incisal guide table.

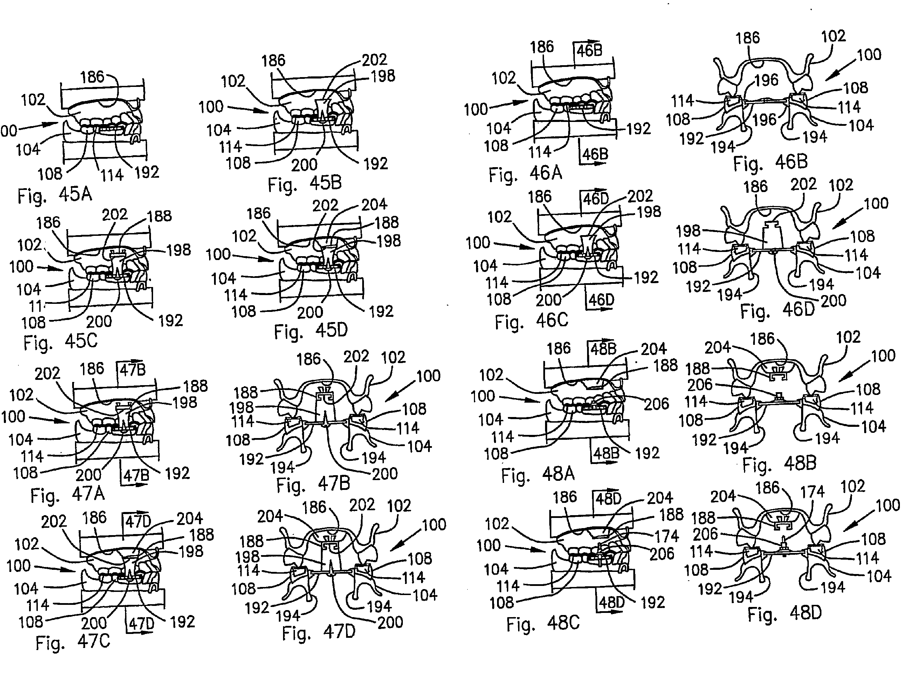

FIGURES 45 through 49 illustrate the steps in attaching a central bearing device to dentures. FIGURES 45A - 45D depict cross section (mid-sagittal plane) views showing the procedures required for attaching a central bearing device to a complete maxillary and mandibular denture with the dentures mounted in an articulator. Figure 45A shows the bearing pin support is first attached to the cameo surface of the mandibular denture using a suitable resin, wax, or adhesive. Figure 45B shows that a jig is next attached to the bearing pin support to assure accurate placement of the bearing plate on the maxillary denture so that the bearing pin contacts the bearing plate in the ideal location. Figure 45C shows the bearing plate assembly is then attached to the jig. Figure 45D shows that the articulator is then opened and a suitable resin, wax, or adhesive is applied to the cameo surface of the palatal aspect of the maxillary denture before the articulator is again closed, resulting in attachment of the bearing plate to the maxillary denture (D).
FIGURES 46A through 46D and FIGURES 47A through 47D provide cross section (frontal plane) views showing the procedures illustrated in Figures 45A - 45D that are required for attaching a central bearing device to a complete maxillary and mandibular denture. Figure 46A is the same view as Figure 45A. Figure 46B is a cross section (frontal plane) view of the dentures of Figure 46A taken along line 46B-46B. Figure 46C is the same view as Figure 45B. Figure 46D is a cross section (frontal plane) view of the dentures of Figure 46C taken along line 46D-46D. Figure 47A is the same view as Figure 45C. Figure 47B is a cross section (frontal plane) view of the dentures of Figure 47A taken along line 47B-47B. Figure 47C is the same view as Figure 45D. Figure 47D is a cross section (frontal plane) view of the dentures of Figure 47C taken along line 47D-47D.
FIGURES 48A through 48D show continuation of the steps illustrated in Figures 45A through 47D necessary for placement of the central bearing device. Figure 48A shows a bearing pin bushing is threaded into one of three holes in the bearing pin assembly. For skeletal class III patients, the posterior-most hole will likely be used. Skeletal class II patients will usually require use of the anterior-most hole, while class I patients will most often use the middle hole. The position occupied by the bushing is dictated by the anterior-posterior maxillomandibular relationship. Figure 48B is a cross section (frontal plane) view of the dentures of Figure 48A taken along line 48B-48B. Figure 48C shows the dentures with the bearing pin threaded through the bushing. Figure 48D is a cross section (frontal plane) view of the dentures of Figure 48C taken along line 48D-48D.

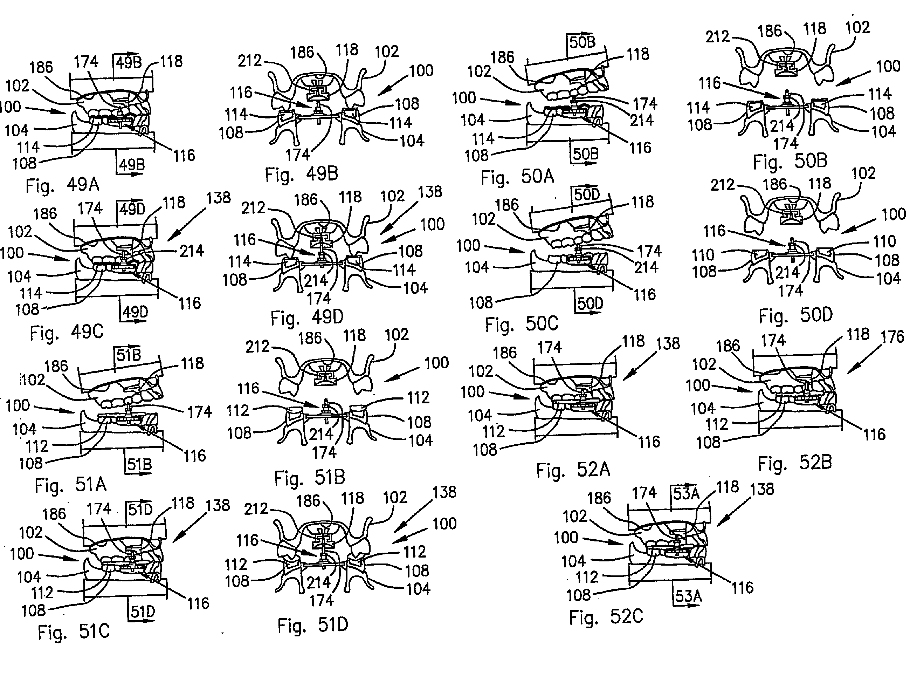

FIGURES 49A through 49D show continued placement of the occlusal device. Figure 49A shows a bearing plate of specific geometric contour is selected and fastened to the bearing plate support. The specific geometric contour of the bearing plate may range from flat, i.e. representative of no horizontal or vertical overlap of the anterior denture teeth, to significantly concave, i.e. representative of substantial vertical overlap with minimal horizontal overlap of the anterior denture teeth. Figure 49B is a cross section (frontal plane) view of the dentures of Figure 49A taken along line 49B-49B. Figure 49C shows the bearing pin adjusted to contact the bearing plate and then pin is fixed in this position with a lock nut. Figure 49D shows a cross section (frontal plane) view of the dentures of Figure 49C taken along line 49D-49D.
FIGURES 50 through 54 illustrate the laboratory central bearing device technique for forming the occlusal surfaces on the special teeth. FIGURES 50A through 50D show cross section (mid-sagittal and frontal plane) illustrations depicting steps in the procedure for forming mandibular posterior occlusal surfaces using the laboratory central bearing device technique. Figure 50A is a mid-sagittal view of the dentures with the articulator opened. Figure 50B is a cross sectional frontal plane view taken along line 50B-50B of Figure 50A. Figure 50C is a mid-sagittal view of the dentures with the resilient occlusal inserts removed from the mandibular posterior denture tooth bases. Figure 50D is a cross sectional frontal plane view taken along line 50D-50D of Figure 50C.
FIGURES 51A - 51D show additional cross section (mid-sagittal and frontal plane) illustrations depicting steps in the procedure for forming mandibular posterior occlusal surfaces using the laboratory central bearing device technique. Figure 51A shows a mid-sagittal view of the dentures of Figure 50C with an excessive amount of appropriate, moldable, synthetic resin (i.e., light or chemically activated acrylic or composite resin) applied to the tooth bases to fill the occlusal receptacles and providing excess resin that extends superior to the proposed occlusal plane. Figure 51B is a cross sectional frontal plane view taken along line 51B-51B of Figure 51A. Figure 51C is a mid-sagittal view of the dentures of Figure 51A showing the maxillary denture teeth after they have been lightly coated with a suitable lubricant and the articulator closed to submerge the cusp tips of the maxillary posterior teeth into the moldable resin. Figure 51D is a cross sectional frontal view taken along line 51D-51D of Figure 51C.
FIGURES 52A - 52D show additional cross section (mid-sagittal and frontal plane) illustrations depicting steps in the procedure for forming mandibular posterior occlusal surfaces using the laboratory central bearing device technique. Figure 52A shows a mid-sagittal view of the dentures of Figure 51C shown in their normal bite position. Figure 52B is a mid-sagittal view of the dentures of Figure 52A shown in a protrusive position as the articulator is moved through all possible eccentric positions while maintaining contact between the central bearing pin and plate in order to form the occlusal morphology in the moldable resin on the mandibular posterior teeth by interaction with the maxillary posterior teeth. Figure 52C is a mid-sagittal view of the dentures of Figure 51B after the occlusal morphology of the resin has been molded and the dentures returned to their normal bite position.

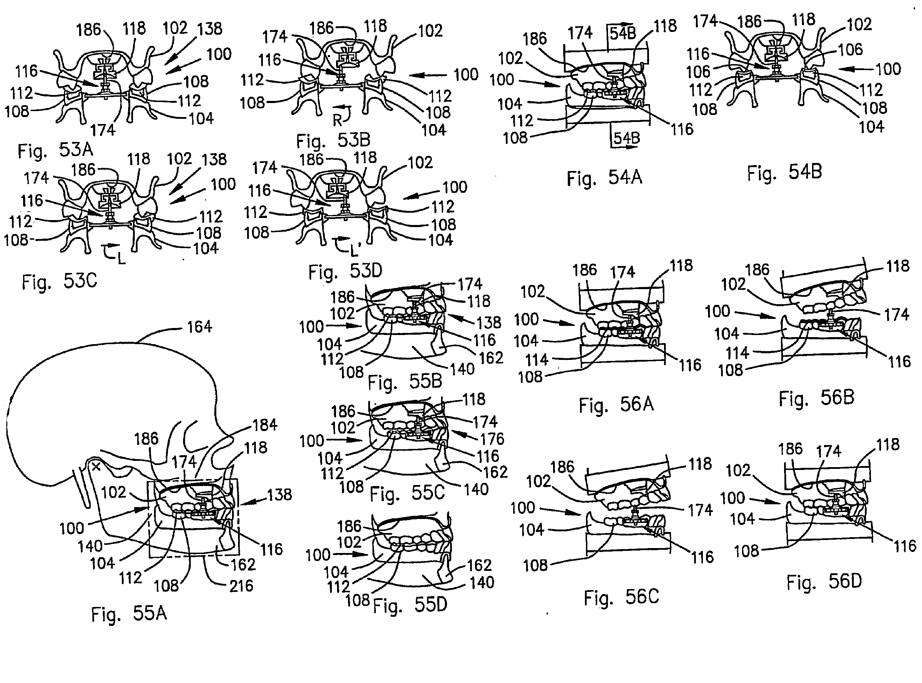

FIGURES 53A - 53D show cross section (frontal plane) views of the dentures of Figures 52C following closure of the articulator so that the posterior maxillary teeth have now entered the moldable resin. Figures 53A through 53D show the various eccentric positions that the dentures and articulator are moved through while maintaining contact between the central bearing pin and plate in order to form the occlusal morphology in the moldable resin on the mandibular posterior teeth by interaction with the maxillary posterior teeth. Figure 53A is a cross sectional view taken along line 53A-53A of Figure 52C showing the dentures in their normal bite position. Figure 53B is a cross sectional view of the dentures of Figure 53A showing the maxillary plate moved to the extreme right relative to the mandibular plate. Figure 53C is a cross sectional view of the dentures of Figure 53B showing the maxillary plate moved back to the normal bite position. Figure 53D is a cross sectional view of the dentures of Figure 53C showing the maxillary plate moved to the extreme left relative to the mandibular plate.
FIGURES 54A and 54B show mid-sagittal plane view and cross section (frontal plane) view, respectively, of the dentures of Figure 53D after the excess resin has been trimmed from the plates. Figure 54A is a mid-sagittal plane view of the dentures of Figure 53D after the excess resin has been trimmed showing the completed mandibular posterior occlusal surfaces of the dentures. Figure 54B is a cross section (frontal plane) view taken along line 54B-54B of Figure 54A.
FIGURE 55 shows the dentures being fitted in the patient's mouth. FIGURES 55A - 55D show the completed dentures being placed in the patient's mouth and evaluated for fit prior to the final polishing and delivery to the patient. Figure 55A shows a cross section (mid-sagittal) view of the completed dentures after they have been placed in the patient's mouth. Figure 55B is an enlarged view of the area within the box of Figure 55A. Figure 55C shows a cross section (mid-sagittal) view of the patient's mouth and dentures as the patient moves his mouth to a protrusive position and to all eccentric positions while the attending dentist evaluates the dentures for proper occlusion. Figure 55D shows a cross section (mid-sagittal) view of the dentures that have been returned to the patient's mouth after determination of accurate occlusion of the dentures, after removal of the central bearing device from the dentures, and after the dentures have been polished.
FIGURES 56 through 58 show the intra oral technique for forming occlusal surfaces on the special teeth. FIGURES 56A through 56D show cross section (mid-sagittal plane) views of the dentures of Figure 49C depicting steps in the procedure for forming mandibular posterior occlusal surfaces using the intraoral technique. Figure 56A is a cross section view of the dentures with articulator closed before the occlusal inserts are removed that is identical to Figure 48C. Figure 56B is a cross section view of the dentures of Figure 56A showing the articulator opened. Figure 56C is a cross section view of the dentures of Figure 56B with the resilient occlusal inserts removed from the mandibular posterior denture tooth bases. Figure 56D is a cross sectional view of the dentures of Figure 56C showing the gap between the posterior teeth of the dentures when the articulator is closed following removal of the occlusal inserts from the mandibular posterior denture tooth bases. The dentures of Figure 56D are ready to be removed from the articulator and shipped to the dentist for intra oral molding of the occlusal surfaces on the mandibular posterior teeth.

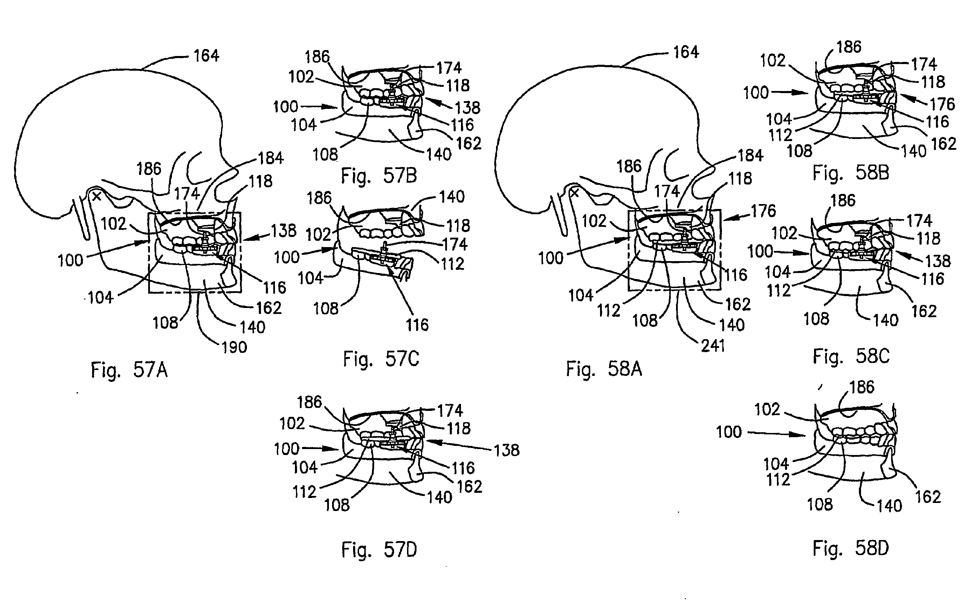

FIGURES 57A - 57D are a continuation of cross section (mid-sagittal plane) illustrations depicting steps that occur in the dentist's office in the procedure for forming mandibular posterior occlusal surfaces on the dentures of Figure 56D using the intraoral technique. Figure 57A shows a cross section view of the dentures with attached central bearing device placed in the patient's mouth. Figure 57B is an enlarged view of the area within the box of Figure 57A. Figure 57C shows a cross section view of the patient with his mouth open and with an appropriate, moldable, synthetic resin (i.e., light or chemically activated acrylic or composite resin) applied to the mandibular posterior tooth bases filling the occlusal receptacles and providing excess material that extends superior to the proposed occlusal plane. Figure 57D show the maxillary denture teeth after being lightly coated with a suitable lubricant and the patient closing his mouth to submerge the cusp tips of the maxillary posterior teeth into the moldable resin.
FIGURES 58A through 58D are a continuation of cross section (mid-sagittal plane) illustrations of Figure 57D depicting steps in the procedure for forming mandibular posterior occlusal surfaces using the intraoral technique. Figure 58A shows the patient with his jaw in a protrusive position after he has closed his mouth and has been instructed to move through all possible eccentric mandibular positions while maintaining contact between the central bearing pin and plate. Figure 58C shows the patient's mouth and dentures after the patient has returned to the normal bite position after moving his jaw in all possible eccentric positions to form the occlusal morphology in the moldable resin on the mandibular posterior teeth as the result of physiologically-dictated movement based on condylar angulations (i.e., the posterior determinants of occlusion) and curvature of the central bearing plate (i.e., the anterior determinant of occlusion). Figure 58D shows the dentures of Figure 58C after the excess resin has been trimmed, the occlusion of the dentures evaluated and accepted as accurate, the central bearing device removed from the dentures, and the dentures polished and returned to the patient.

### DETAILED DESCRIPTION OF THE PREFERRED EMBODIMENT THE INVENTION

Referring now to the drawings and initially to Figure 3 and Figures 16 through 18, there is illustrated a set of dentures 100 that includes an upper or maxillary denture 102 constructed in accordance with traditional construction methods and a mating lower or mandibular denture 104 that has been constructed in accordance with a preferred embodiment of the present invention. The present invention is a method for forming balanced dental prosthetic occlusion that is coincident with centric relation at a predetermined occlusal vertical dimension.

The present invention encompasses a method of forming occlusal surfaces 106 by means of at least three separate techniques and the occlusal surfaces 106 thus produced. The present invention further encompasses the unique special denture teeth 108 that are each constructed of a resin material and provided with a receptacle 110 therein for receiving a moldable synthetic resin 112 and the associated insert 114 for removable placement in each of the receptacles 110.

Referring also to Figure 10, the present invention further encompasses a central bearing device 116 complete with multiple bearing plates 118 of specific geometric forms. The three techniques that can be used for forming the occlusal surfaces 106 are the laboratory central bearing device technique, the laboratory anterior guide pin technique, and the intraoral technique.

For simplicity in describing the method, all three techniques will be described in association with the construction of a full set of dentures 100. Figures 1 through 18 and the creation of a full set of dentures 100 according to the present method will first be described in a general manner and then the details of each of the three techniques will be specifically described thereafter.

Referring now to Figures 1, 2 and 3, in constructing dentures 102 and 104 employing the present method, the front teeth 120 of both the maxillary denture 102 and the mandibular denture 104 are selected and placed in the dentures 102 and 104 according to traditional methods based on traditional esthetic and functional considerations. The front teeth 120 include both the canine teeth 122 and all the incisor teeth 124 which are located between the two canine teeth 122 on the dentures 102 or 104. Also, the upper posterior teeth 126U, which include the upper molars 128 and upper premolars 130, are likewise selected and placed in the maxillary denture 102 according to traditional methods and based on traditional considerations. However, special teeth 108 are selected and placed in the mandibular denture 104 as the lower posterior teeth 126L. As illustrated in Figures 1 and 2, the special teeth 108 with their associated resilient occlusal inserts 114, are positioned in the mandibular denture 104 using standard techniques.

Although the illustrations show the special teeth 108 placed in the mandibular denture 104, the invention is not so limited. Similar special teeth possessing maxillary tooth contours and occlusal morphology could alternately be placed in the maxillary denture 102. However, for purposes of illustration, the drawings show the special teeth 108 in use on the mandibular denture 104.

Referring to Figure 12, these special teeth 108 each have a hollow receptacle 110 located where the occlusal surface 106 for the special tooth 108 will later be formed, as illustrated in Figure 16. As shown in Figures 7 and 8, the receptacles 110 are initially filled with the removable inserts 114, but later the inserts 114, as shown in Figures 11 through 13, will be removed from the special teeth 108 and the receptacles 110 will be filled with moldable synthetic resin 112, as shown in Figure 14, and will be molded into the proper occlusal morphology 106, as illustrated in Figure 14 by the opposing upper posterior teeth 126U. A set of special teeth 108 is illustrated in Figures 1 and 2. As shown in Figure 12 the receptacle 110 of each special tooth 108 is provided with an undercut area 132 so that when the synthetic resin 112 is placed in the receptacle 110, as shown in Figure 14, the synthetic resin 112 will fill the undercut area 132 and, upon hardening, as illustrated in Figure 15, the synthetic resin 112 will be more securely retained in the receptacle 110 of the special tooth 108. Two specific types 108A and 108B of special teeth 108 are illustrated in Figures 19A through 19F and Figures 20A through 20F, as will be described in more detail hereafter.

Also, each of the receptacles 110 of the special teeth 108 is initially provided with removable occlusal inserts 114, as illustrated in Figures 1, 2, 7, 8, and 9. The purpose of the occlusal inserts 114, as illustrated in Figures 10, is to provide a groove 134 in which the upper lingual cusps 136 of the upper posterior teeth 126U rest when the partially completed dentures 100 are in centric relation position 138, i.e. in the physiologically optimal occlusal position, and when the dentures 100 are properly related vertically to match the most appropriate physiology of the patient 140. Figure 10 illustrates the upper lingual cusp 136 resting in the groove 134 provided in the occlusal insert 114 when the partially completed dentures 100 are in centric relation position 138. The occlusal inserts 114 are preferably constructed of silicone or other similar flexible material so that when the occlusal inserts 114 later need to be removed from the receptacles 110 of the special teeth 108, the occlusal inserts 114 are sufficiently flexible to be removed from the receptacles 110 by pulling or pushing the occlusal inserts 114 out of the receptacles 110.

As a starting point for all three of the techniques that are used to construct the occlusal surfaces 106 employing the present method, the dentures 100 are constructed and processed to the point illustrated in Figures 27A and 27B. Figures 27A and 27B show the dentures 100 in an articulator 142 on their associated master casts 144 with the inserts 114 still located in the receptacles 110 of the special teeth 108. Then, in order that the dentures 100 can be remounted on the articulator 142 after they have been flasked, processed, finished and polished in the same relative positions and relationship as the dentures 100 were located in Figure 27A, first a maxillary remount record 146 is created using a conventional remount jig, as illustrated in Figure 28A, and then the articulator's incisal pin is lengthened and an interocclusal remount record 148 is created, as illustrated in Figure 28B.

Figures 29A through 30C show the dentures 100 being repositioned in the articulator 142 after the dentures 100 have been flasked, processed, finished and polished. Figure 29A shows the maxillary denture 102 positioned on a conventional remount cast 150 sitting on the maxillary remount record 146 in the articulator 142. The maxillary remount record 146 holds the maxillary denture 102 in the proper position as mounting stone 152 is placed between the maxillary remount cast 150 and an upper member 154 of the articulator 142 to secure the maxillary denture 102 to the articulator 142, as illustrated in Figure 29B. Figure 29C shows that the maxillary remount record 150 is then removed from the articulator 142 in preparation for remounting the mandibular denture 104 in the articulator 142.

Next, as shown in Figure 30A, the articulator's incisal pin is appropriately lengthened and the interocclusal remount record 148 is used to position the mandibular denture 104 and its remount cast 156 relative to the maxillary denture 102. As shown in Figure 30B, mounting stone 158 is placed between the mandibular remount cast 156 and a lower member 160 of the articulator 142 to secure the mandibular denture 104 to the articulator 142. Finally, in Figure 30C, the interocclusal remount record 148 is removed from between the maxillary denture 102 and the mandibular denture 104 and the incisal pin 170 is shortened to its original length. The dentures 100 have now been repositioned on the articulator 142 in the same relative positions as they were located in Figure 27A.

Figures 31 through 36B illustrate how the movement of a patient's mandible 162 relates to the movement of the articulator 142 and how that movement influences the shape of the occlusal surfaces 106 that will be formed on the special teeth 108 employing each of the three techniques. The motion of a patient's mandible 162 is not simple straight-line or hinge articulation from or about a single axis. Instead, the motion of a patient's jaw 162 is influence by anatomically dictated angles that are unique to each patient, and the articulator 142 must be adjusted to properly represent and reproduce the physiology of the patient. Specifically, an anatomically dictated angle that influences the motion of a patient's mandible 162 is the shape and slope of the patient's condylar eminence, i.e. the patient's condylar protrusive inclination, as represented in Figures 32 through 36B by arrows C". Arrows C" show that the anterior-posterior movement of the condyles of the patient's mandible 162 occurs at an inclined or oblique orientation relative to the patient's skull 164. A second anatomically dictated angle, also shown in Figure 32, which influences the motion of a patient's mandible 162 is the relative position of the patient's upper and lower front teeth 120U and 120L and their relative interaction as the patient's mandible 162 is protruded, i.e. the patient's incisal protrusive inclination, denoted by I".

Figures 31 and 32 illustrate how an articulator 142 is adjusted so that the articulator's condylar guidance, as denoted by C', matches the patient's measured condylar protrusive inclination, as denoted by C". The upper and lower anterior denture teeth 120U and 120L are related to each other in a similar fashion regardless of whether the dentures 100 are placed on the articulator 142 or placed in the patient's mouth 140. Therefore, the incisal protrusive inclination is represented on the articulator 142 in as similar way as it is represented in the patient's mouth 140. The incisal protrusive inclination is denoted by I' Appropriate replication of the patient's condylar protrusive inclination C" and the incisal protrusive inclination I' on the articulator 142 renders the articulator 142 adequately representative of the patient's mandibular 162 movement to accurately construct complete dentures 102 and 104.

As previously stated, the front teeth 120 for a patient's dentures 100 are selected based on traditional principals, including esthetics and phonetics. The dentist will determine the proper vertical and horizontal overlap, if any, of the upper front teeth 120U relative to the lower front teeth 120L for the patient's dentures 100, based on clinical judgment. The relative position of the front teeth 120 in the dentures 100 will determine the patient's incisors protrusive inclination, as represented in Figures 32 through 36B by arrows I". Arrows I" are the angle that the lower front teeth 120 must follow during protrusion of the patient's mandible 162 to avoid disruption of the denture stability due to collision or heavy contact of the front teeth 120. Obviously the incisal protrusive angle, represented by I", can be changed by altering the relative positions of the upper and lower front teeth 120U and 120L. For example, Figures 33A and 33B show a patient's mouth 140 with front teeth 120 that have a specific horizontal and vertical overlap that orients the incisal protrusive angle 1" at a specific oblique projection. In comparison, Figures 35A and 35B show the same patient's mouth 140 with different dentures having front teeth 120 that do not possess vertical overlap. This positional relationship of the front teeth orients the incisal protrusive angle I" at an approximately horizontal projection.

Referring to Figures 3, 16, 18 and 32, given these two angles of mandibular movement, i.e. C" and I", that are patient specific and determined by the patient's anatomy, physiology and position of the front teeth 120, the real challenge in making dentures 100 is to produce occlusal surfaces 106' and 106 for the upper and lower back teeth 126U and 126L so that the occlusal surfaces 106' and 106 of those back teeth 126 will continue to touch at all points and through all movements of the patient's jaw 162. Conceptually, this continuous contact of opposing posterior denture teeth 126 through all possible mandibular movements is called balanced occlusion. Achieving balanced occlusion during denture construction permits optimal denture stability for the patient. Complicating the achievement of balanced occlusion during movement of the patient's mandible 162 is the fact that the soft tissues overlying the patient's edentulous ridges are flexible and the dentist must try to fit a rigid prosthesis to the compressible denture-bearing soft tissues of the patient's mouth 140. Until now, accomplishing the goal of making dentures 100 with posterior teeth 126 positioned to achieve balance occlusion has been difficult and time consuming in both the laboratory and clinic. Typically, the resultant dentures lack balanced occlusion resulting in dislodgement of instability of the dentures when the patient's posterior teeth 126 come together. If the anterior denture teeth touch without simultaneous posterior tooth contact, the posterior aspect 166 of the maxillary denture 102 tends to dislodge and fall downward while the posterior aspect 168 of the mandibular denture 104 lifts off the supporting tissues. The present method will allow the goal of creating occlusal surfaces 106 on the posterior denture teeth 126 that articulate in all eccentric mandibular positions. The present method will achieve this goal either by employing one of the two laboratory techniques to create occlusal surfaces 106 in the laboratory on an articulator 142, or by employing the intraoral technique to create occlusal surfaces 106 in the patient's mouth 140 using the patient's true mandibular 162 movement.

The present method employs either a central bearing device 116, i.e. employed in the intraoral technique and in the laboratory central bearing device technique, or alternately, employs an articulator anterior guide pin 170 with an appropriately adjusted guide pin table 172 in the laboratory anterior guide pin technique to maintain the upper and lower dentures 102 and 104 in the proper relative relationship through all eccentric movements. Figures 34A, 34B, 36A and 36B illustrate that the bearing plate 118 of the central bearing device 116 possesses a bearing surface curvature A that is coincident with the combined effect of the patient's measured condylar protrusive inclination C" and the patient's incisal protrusive inclination I". The anterior-posterior and medial-lateral bearing surface curvature A of a bearing plate 118 is further illustration in Figures 5 and 6. Curvature of the bearing surface of bearing plate 118 in Figure 34A and 34B is greater than the curvature of bearing plate 118 of Figures 36A and 36B. This is necessary due to the change in the relative position of the front teeth 120 shown in Figure 33A, i.e. with some vertical overlap compared to the relative position of the front teeth 120 shown in Figure 35A, i.e. with no vertical overlap.

The bearing plate 118 is selected from a number of possible bearing plates 118, each offering a different curvature of the bearing surface. Selection of the appropriate bearing plate 118 allows the central bearing pin 174 of the central bearing device 116 to maintain contact with the bearing surface of the bearing plate 118 as the patient's mandible 162 moves eccentrically, with the mouth 140 closed.

The central bearing device 116, or alternatively the anterior guide pin device 178, provides a stable point for anterior guidance of mandibular movement on the articulator 142. In the patient, anterior guidance of mandibular movement is typically provided by the relative relationship of the front upper and lower teeth 120U and 120L. Posterior guidance of mandibular movement is provided by the left and right condyles 180 in the patient, or the left and right condylar housing 181 in the articulator 142. Therefore, three points of contact exist between the maxilla and mandible in the patient, i.e. front teeth 120, left and right condyles 180. Three points of contact may also exist between the maxillary and mandibular members of the articulator, i.e. central bearing device 116 or anterior guide pin 170, and left and right condylar housings 181. Contact at these three points and the angular or curvilinear nature of motion due to these contacts as the mandibular movement occurs dictates the relative movement between the upper and lower dentures 102 and 104. Stated differently, the three-dimensional nature of movement between the lower denture and upper denture 102 and 104 is dictated by these three contacting points and the surfaces against which they may travel. In order to achieve balanced occlusion between the upper and lower dentures 102 and 104, the occlusal surfaces 106' and 106 of the posterior denture teeth 106U and 106L must be properly contoured and appropriately related to one another so that they are capable of continuous contact during all eccentric mandibular movements. Being able to use true mandibular movement during the formation of posterior occlusal surfaces 106, i.e. the intraoral technique, or being able to accurately replicate mandibular movement on the articulator, i.e. the laboratory anterior guide pin technique or the laboratory central bearing device technique, permits accurate forming of the lower posterior occlusal surfaces 106 using the present invention.

With the ability to maintain the upper and lower dentures 102 and 104 in their proper relative relationship, the posterior teeth, 126U or 126 located in either the patient's mandible or maxilla 162 or 184, or in the upper or lower dentures 102 or 104 can now be used to form the occlusal surfaces 106 on the special teeth 108 provided in the opposing jaw 184 or 162 or denture 104 or 102. This results in occlusal surfaces 106 on the patient's posterior teeth 126L or 126U that maintain continuous contact with the opposing posterior teeth 126U or 126L as the patient moves the mandible 162 through all eccentric positions with the mouth 140 closed.

In this invention, occlusal surfaces 106 are formed using one of the three techniques, i.e. the laboratory central bearing device technique, the laboratory anterior guide pin technique, or the intraoral technique. The occlusal surfaces 106 are formed in the laboratory using an articulator 142 in the first two techniques and are formed in the patient's mouth 140 in the third technique. The first and third techniques employ a central bearing device 116 to provide anterior guidance for movement of the lower denture and maintain the proper spacing between the dentures 100, as illustrated respectively in Figures 37A and 55A; and the second technique employs an anterior guide pin 170 and associated guide pin table 172 to provide anterior guidance for movement of the lower denture 104 and maintain the proper spacing between the dentures 100, as illustrated in Figure 37B.

The associated guide pin table 172 is either mechanically adjusted or custom made using synthetic resin to coincide with the patient's incisal protrusive inclination I" for the patient's front teeth 120 and the patient's condylar protrusive inclination C". The bearing plate 118 that is selected for the central bearing device 116 used in the first and third techniques is selected so that it is contoured to coincide with the patient's incisal protrusive inclination I" for the patient's front teeth 120 and the patient's condylar protrusive inclination C" as illustrated in Figures 34B, 36B, and 37A.

As a general introduction to the three techniques of forming the occlusal surfaces 106, a general overview of the steps common to all three techniques follows. The customized occlusal surfaces 106 are formed by any one of the three techniques by first removing the resilient occlusal inserts 114 from the special teeth 108, as shown in Figures 11, 12, and 13. Then customized occlusal surfaces 106 can be formed, as shown in Figure 14, by first overfilling the receptacles 110 from which the inserts 114 were removed with an appropriate, moldable, synthetic resin 112 and then moving the dentures 100 through all eccentric positions while maintaining the dentures 100 in proper relative vertical relationship. The proper relative vertical relationship is maintained either by maintaining the central bearing pin 174 in contact with the bearing plate 118 if either the laboratory central bearing device technique or the intraoral technique are employed, or alternately, in the case of the anterior guide pin technique, by maintaining the anterior guide pin 170 in contact with its associated guide pin table 172.

The resulting movement of the dentures 100 through all eccentric positions causes the posterior maxillary teeth 126U to sculpt or form the occlusal surfaces 106 of the posterior mandibular teeth 126L from the moldable synthetic resin 112. After the occlusal surfaces 106 of the posterior mandibular teeth 126L have been formed, the resin 112 is permitted to cure or polymerized and excess resin 112 is trimmed from the dentures 100, resulting in the dentures 100 illustrated in Figure 15. The resin 112 will preferably be cured or polymerized either based on the elapse of time or by light activation.

The dentures 100 of Figure 15 are then placed in the patient's mouth 140 to check for proper occlusion. As illustrated in Figures 55A, 55B, and 55C, if either the laboratory central bearing device technique or the intraoral technique was employed to form the occlusal surfaces 106, the central bearing device 116 will still be attached to the dentures 100 as they are placed in the patient's mouth 100 to check for proper occlusion. Once proper occlusion has been verified, the central bearing device 116 is removed from the dentures 100 for those dentures 100 that were constructed by either the laboratory central bearing device technique or the intraoral technique, and the dentures 100 are then polished and made ready for delivery to the patient for their use, as illustrated in Figures 16, 17, and 18.

With this brief overview of the method, the three specific techniques of forming the occlusal surfaces 106 on the special teeth 108 according to the present method will now be described.

### The Laboratory Central Bearing Device Technique

The laboratory central bearing device technique is a technique for forming the occlusal surfaces 106 on the special teeth 108 in the laboratory using a central bearing device 116 attached to the dentures 100 as a means for maintaining the proper vertical relationship between dentures 102 and 104 while the occlusal surfaces 106 are created. Following processing and recovery of the dentures from the master casts, the definitive maxillary denture 102, shown in Figure 3, and the definitive mandibular denture 104, shown in Figure 1, are remounted in a semi-adjustable articulator 142, as illustrated in Figure 31.

Next a central bearing device 116 is attached to the dentures 100. The central bearing device 116 consists of a central bearing plate 118 that removably attaches to the palatal aspect 186 of the maxillary denture 102 via a central bearing plate assembly 188 and central bearing pin 174 that removably attaches to and is adjustable in height relative to a central bearing pin assembly 192. The bearing pin assembly 192 extends between the lingual flanges 194 of the mandibular denture 104 across the tongue space. The steps involved in attaching the central bearing device 116 to the dentures 100 are illustrated in Figures 45A through 49B.

Beginning with Figure 45A, the central bearing pin assembly 192 is attached to the lingual flanges 194 of the mandibular denture 104 via adhesive 196, epoxy, synthetic resin, or other similar compound. This is also illustrated in Figures 46A and 46B. Next, a jig 198 is attached to the central bearing pin assembly 192 via a screw 200, as illustrated in Figures 45B, 46C, and 46D. Next, the central bearing plate assembly 188 is attached to the top 202 of the jig 198, as illustrated in Figures 45C, 47A, and 47B. The central bearing plate assembly 188 is then attached to the palatal aspect of the maxillary denture 102 via adhesive 204, epoxy, synthetic resin, or other similar compound, as shown in Figures 45D, 47C, and 47D.

After the adhesive 204 has set, the jig 198 is removed from the central bearing plate assembly 188 and an internally threaded central bearing pin bushing 206 is added to the central bearing pin assembly 192, as illustrated in Figures 48A and 48B. As illustrated in Figures 7 and 11, the central bearing pin assembly 192 is preferably provided with several central openings 208 arranged along a median 210 of the mandibular denture 104. The central bearing pin bushing 206 can be attached to any one of the central openings 208. The central openings 208 allow the central bearing pin 174 to be adjusted in an anterior-posterior direction, if desired. Next, the externally threaded central bearing pin 174 is threaded into the central bearing pin bushing 206, as shown in Figures 48C and 48D.

The final step in attaching the central bearing device 116 to the dentures 100 is illustrated in Figures 4, 5, and 6 and Figures 49A and 49B. These figures show that a bearing plate 118 of the proper bearing surface contour has been selected to coordinate with the patient's condylar protrusive inclination C" and the patient's incisal protrusive inclination I" and has been attached to the central bearing plate assembly 188. Selection of the bearing plate 118 may be done by a trial and error method until a bearing plate 118 of the proper contour is found. Alternately, although not illustrated, a bearing plate 118 may be custom created employing methods similar to those that are described below to construct a custom made guide pin table 172 for use in the laboratory anterior guide pin technique. The bearing plate 118 slides onto the central bearing plate assembly 188 and is secured thereto by a screw 212, as illustrated in Figure 49B.

After the central bearing device 116 has been attached to the dentures 100, the central bearing pin 174 must be adjusted in height, as illustrated in Figures 49C and 49D so that the central bearing pin 174 contacts the bearing plate 118 when the dentures 100 are in their normal or centric relation position 138, i.e. with the lingual cusps 136 of the posterior maxillary teeth 126U resting in the central grooves 134 of the occlusal inserts 114 in the special teeth 108 serving as the posterior teeth 126L of the mandibular denture 104. After the central bearing pin 174 has been properly adjusted in height, it is locked in place by tightening a locking nut 214 that is threaded onto the central bearing pin 174.

Once the central bearing pin 174 is properly adjusted and locked into place with the dentures 100 mounted in the articulator 142, the technician is then ready to begin employing the laboratory central bearing device technique to create the occlusal surfaces 106 on the special teeth 108, or alternately, is ready to provide the dentures 100 to the dentist who will then employ the intraoral technique to create the occlusal surfaces 106 on the special teeth 108 inside the patient's mouth 140. The laboratory central bearing device technique is illustrated in Figures 50A through 54B and will be described hereafter, with discussion of the intraoral technique postponed until later.

Beginning with Figures 50A and 50B, with the dentures 100 still in the articulator 142, the dentures 100 are first opened. Then, as illustrated in Figures 50C and 50D, the inserts 114 are removed from the special teeth 108, leaving the receptacles 110 open in the special teeth 108. Next, as illustrated in Figures 51A and 51B, a moldable synthetic resin 112 is placed in the receptacles 110 in excess. At this point it is desirable to coat the upper posterior teeth 126U of the maxillary plate 102 with petroleum jelly or a similar substance so that the resin 112 will not adhere to them during the next step in the procedure.

Thereafter, the dentures 100 are closed, as shown in Figures 51C, 51D and 52A to their normal bite position 138, i.e. with the central bearing pin 174 contacting the bearing plate 118 and the lingual cusp 136 of the upper posterior teeth 126U forced downward and into the moldable resin 112. Then, as illustrated in Figure 52B, the dentures 100 are moved to the protrusive position and then returned to the normal bite position 138, as shown in Figures 52C and 53A. Next, as shown in Figures 53B, 53C, and 53D, the maxillary denture 102 is moved toward the patient's right side as indicated by Arrow R, next moved back to the normal bite position 138 as indicated by Arrow L, and then moved toward the patient's left side as indicated by Arrow L'. As the upper posterior teeth 126U move through the moldable resin 112 in all eccentric positions, i.e. moved through all possible movements of the closed articulator 142, they sculpt or form the resin 112 into a mating mirror image of their path of movement, and thus form occlusal surfaces 106 on the special teeth 108 that perfectly mate with the occlusal surfaces 106' on the opposing teeth 126U, i.e. form balanced occlusion. After the sculpting has thus been completed, the resin 112 is allowed to polymerize and excess resin 112 is trimmed from the dentures 100, as illustrated in Figures 54A and 54B.

At this point, the dentures 100 are provided to the dentist to check the dentures 100 for proper fit in the patient's mouth 140. The central bearing pin device 116 remains attached to the dentures 100 for this fitting, as illustrated in Figures 55A, 55B, and 55C. Figure 55A shows the completed dentures 100 placed in the patient's mouth 140 and with the patient's mouth 140 in the normal bite position 138. Figure 55B is an enlarged view of the portion of the patient's mouth 140 shown within box 216 of Figure 55A. Figure 55C illustrates that the patient's mouth 140 following instruction by the dentist to move the mandible 140 in all eccentric positions while the dentist checks for proper occlusion employing standard methods for conducting this evaluation. At this point, the dentist will make any minor adjustments that might be needed in the dentures 100.

Once the fit and occlusion have been verified, the dentist removes the dentures 100 from the patient's mouth 140. The central bearing device 116 is then removed from the dentures 100, and the dentures 100 are polished. The dentures 100 are then ready for the final placement in the patient's mouth 140 and construction of the dentures 100 is complete. The dentures 100 are given to the patient for use, as illustrated in Figure 55D.

### The Laboratory Anterior Guide Pin Technique

If the second technique is employed, i.e. the laboratory anterior guide pin technique, the guide pin table 172 must first either be adjusted for proper tilt and orientation, as illustrated in Figures 39A through 41D, or alternately, a custom made guide pin table 172' must be created from moldable synthetic resin 112, as illustrated in Figures 42A through 44B. Regardless of whether an adjustable guide pin table 172, as illustrated in Figure 41D, or a custom made guide pin table 172', as illustrated in Figure 44B, is employed, the guide pin table 172 or 172' that is employed will be properly shaped to coincide with the patient's condylar protrusive inclination C" and the incisal protrusive inclination I" for the patient's front teeth 120.

If an adjustable guide pin table 172 is employed, the dentures 100, as illustrated in Figure 38, are placed in the articulator 142 in a normal bite position 138, as previously described and depicted in Figure 31 from a side view and as now depicted in Figure 39A in a frontal view. As shown in Figure 39B, the dentures 100 are then moved to a protrusive position by moving the upper arm 154 of the articulator 142 and the maxillary denture 102 in a posterior direction. As shown in Figure 39B, for a patient with vertical overlap of the front teeth 120, this movement causes the incisal pin 170 to move upward so that it no longer touches the guide pin table 172. As shown in Figure 39C, the guide pin table 172 is then adjusted by loosening the locking screw 224 located under the mandibular member 160 of the articulator 142 and elevating the posterior end of the guide table 222 until contact is achieved with the guide pin 170. Next, as illustrated in Figure 39D, the articulator 142 and dentures 100 are moved back to the normal centric relation position 138. The adjustable guide pin table 172 has now been properly adjusted in the anterior-posterior direction, but now needs to be adjusted in the medial-lateral direction.

Beginning with the dentures 100 in their normal centric relation position 138, as shown in Figures 39D and 40A, the left lateral wing 218 of the guide table 172 now is adjusted. First the articulator 142 and maxillary denture 102 are moved to the patient's left side until alignment of the facial cusps of the posterior denture teeth is achieved, as shown in Figure 40B, which causes the anterior guide pin 170 to move upward so that it no longer touches the left wing 218 of guide table 172. As shown in Figure 40C the left wing 218 of the guide table 172 is then elevated by loosening the locking screw 226 located under the left side 228 of guide table 172 elevating the left wing 218 of the guide table 172 to once again contact the anterior guide pin 170. Next, as illustrated in Figure 40D, the articulator 142 and dentures 100 are moved back to the normal centric relation position 138. The adjustable guide pin table 172 has now been properly adjusted on the left side 228, but now must be adjusted on the right side 230.

Beginning with the dentures 100 in their normal centric relation position 138, as shown in Figures 40D and 41A, the right lateral wing 220 of the guide table 172 now is adjusted. First the articulator 142 and maxillary denture 102 are moved to the patient's right side until alignment of the facial cusps of the posterior denture teeth is achieved, as shown in Figure 41B, which causes the anterior guide pin 170 to move upward so that it no longer touches the right wing 220 of guide table 172. As shown in Figure 41C the right wing 220 of the guide pin table 172 is then adjusted by loosening the locking screw 232 located under the right side 230 of guide table 172 and elevating the right wing of the guide table until contact is achieved with the anterior guide pin. Next, as illustrated in 41 D, the articulator 142 and dentures 100 are moved back to the normal centric relation position 138. The adjustable guide pin table 172 has now been properly adjusted for anterior-posterior and medial-lateral movement and is ready for use in the laboratory anterior guide pin technique which will be described in detail hereafter.

Alternately, instead of employing an adjustable guide pin table 172, a custom made guide pin table 172' can be created, as illustrated in Figures 42A through 44B. The steps involved in creating a custom made guide pin table 172' begin with placing the dentures 100 in the normal centric relation position 138, as shown in Figure 42A. Next, the articulator 142 is opened and an excess quantity of moldable synthetic resin 112 is placed on the guide table base 234. Then, the articulator 142 again closed to the normal centric relation position 138 so that the anterior guide pin 170 projects into the resin 112, as illustrated in Figure 42B. Next, the dentures 100 are moved to the protrusive position and the anterior guide pin 170 molds an upward slope 236 in the resin 112 extending posteriorly as shown in Figure 42C. The dentures are moved back to the normal centric relation position 138, as illustrated in Figure 42D, thereby completing the anterior-posterior molding of the resin 112 for the custom made guide table 172'.

Next the resin 112 must be molded medial-laterally. From the normal centric relation position 138 shown in Figure 42D, the dentures 100 are moved so that the maxillary denture 102 moves to the patient's left side, thereby molding the resin 112 to form the left side 238 of the custom made guide pin table 172', as illustrated in Figure 43A. The normal centric relation position 138 is resumed, as illustrated in Figure 43B, and then the dentures 100 are moved so that the maxillary denture 102 moves to the patient's right side, thereby molding the resin 112 to form the right side 240 of the custom made guide pin table 172', as illustrated in Figure 43C. Then the normal centric relation position 138 is resumed, as illustrated in Figure 43D. Figure 44A shows the resin 112 after polymerized but before the excess resin 112 has been removed from the custom made guide table 172', and Figure 44B shows the completed custom guide table 172' after the excess resin 112 has been trimmed. The custom made guide pin table 172' is then ready for use in the laboratory anterior guide pin technique.

The laboratory anterior guide pin technique for creating the occlusal surfaces 106 is identical to the laboratory central bearing device technique with the exception that the dentures 100 are held in proper vertical relationship on the articulator 142 with the anterior guide pin 170 and its associated guide pin table 172 or 172' in this technique as opposed to use of a central bearing device 116 with its central bearing pin 174 and its associated bearing plate 118 in the later technique. In all other respects the steps of the two techniques are identical. Obviously, since the anterior guide pin 170 and its associated guide pin table 172 or 172' are secured to the articulator 142 instead of to the dentures 100, there is no need to remove the anterior guide pin 170 and its associated guide pin table 172 or 172' from the articulator 142 after the occlusal surfaces 106 have been created by this technique in a similar manner to the removal of the central bearing device 116 from the dentures 100 when the laboratory central bearing device technique is employed. A detailed description of the laboratory anterior guide pin technique is not provided since it would simply be a repeat of the description previously provided in relationship to the laboratory central bearing device technique in all other respects except for the substitution of the anterior guide pin 170 and its associated guide pin table 172 or 172' for the central bearing device 116.

### The Intraoral Technique

The intraoral technique begins with construction of dentures 100 to the point illustrated in Figure 38. Next, the central bearing device 116 is attached to the dentures 100 and the central bearing pin 174 is adjusted in height as previously described for the laboratory central bearing device technique and as illustrated in Figures 45A - 49D. Following installation of the central bearing device 116 on the dentures 100 and adjustment of the height of the central bearing pin 174, the dentures 100 are prepared so that they can be provided to the dentist who will then employ the intraoral technique to create the occlusal surfaces 106 on the special teeth 108 while the dentures 100 are located in the patient's mouth 140.

Referring now to Figures 56A through 58D, the intraoral technique for molding the occlusal surfaces 106 of the special teeth 108 will be described. Beginning with Figure 56A, the dentures 100 illustrated in Figures 49C and 49D are shown still located in the articulator 142 with the central bearing device 116 still attached. The articulator 142 and dentures 100 are then opened, as shown in Figure 56B, and the inserts 114 are removed from the special teeth 108, as shown in Figure 56C. The dentures 100 are then closed again as illustrated in Figure 56D and both the remount casts 150 and 156 and dentures 100 are removed from the articulator 142 and are provided to the dentist without removing the central bearing device 116 from the dentures 100.

The dentist places the dentures 100 in the patient's mouth 140 and the patient is instructed to move his mouth 140 to the normal centric relation position 138, which is illustrated in Figures 57A and 57B. Figure 57B is an enlarged view of the area contained within box 190 of Figure 57A. The central bearing pin 174 should touch the central bearing plate 118 in this position. Next, as illustrated in Figure 57C, the patient is instructed to open his mouth 140, so that the dentist can fill the receptacles 110 of the special teeth 108 with moldable synthetic resin 112 in excess, as illustrated in Figure 57C. At this time, the dentist will also make sure that the posterior teeth 126U of the maxillary denture 102 are coated with a suitable lubricant, such as for example petroleum jelly, so that the resin 112 will not stick to them during the next step in the process.

The patient then closes his mouth 140 to the normal centric relation position 138, which is shown in Figure 57D. As shown in Figures 58A and 58B, the patient then moves his mandible 140 to the protrusive position and thereafter to all other eccentric positions while constantly maintaining the central bearing pin 174 in contact with the central bearing plate 118. Figure 58B is an enlarged view of the area within box 241 of Figure 58A. Finally, the patient's mouth 140 returns to the normal centric relation position 138 as illustrated in Figure 58C. The patient then opens his mouth 140, the dentures 100 are removed and the resin 112 is allowed to polymerize. Thereafter the excess resin 112 is trimmed from the dentures 100 and the central bearing device 116 is removed, the dentures 100 are polished and ready for finally fitting in the patient's mouth 140 before the completed dentures 100 are given to the patient for their use, as illustrated in Figure 58D.

### Two Types of Special Teeth

As previously mentioned, there are at least two different types 108A and 108B of special teeth 108 that can be employed for the present method. Referring to Figures 19A through 19F and Figures 20A through 20F, the forming of the occlusal surface 106 on each of the two different types, i.e. 108A and 108B, of special teeth 108 is illustrated. Either type 108A or 108B of special teeth 108 may be employed with any of the three techniques for forming the occlusal surfaces 106. The illustrations provided in Figures 19A through 20F therefore apply to all three techniques.

Figures 19A and 20A illustrate, respectively, the two different types of special teeth 108A and 108B with the dentures 100 opened. Figures 19B and 20B illustrate, respectively, the two different types of special teeth 108A and 108B with the dentures 100 closed as was previously illustrated in Figure 10, i.e. with the upper lingual cusps 136 resting in the central groove 134 provided in the occlusal inserts 114 when the partially completed dentures 100 are in centric relation position 138. Figures 19C and 20C illustrate, respectively, the two different types of special teeth 108A and 108B with the inserts 114 removed. Figures 19D and 20D illustrate, respectively, the two different types of special teeth 108A and 108B with synthetic resin 112 overfilling their receptacles 100 that were left vacant by the removal of the inserts 114. Figures 19E and 20E illustrate, respectively, the two different types of special teeth 108A and 108B with the upper lingual cusp 136 sculpting or forming the resin 112 as the upper lingual cusp 136 is moved through all eccentric position, as indicated by Arrows E and E', thereby forming the occlusal surfaces 106 on the special teeth 108A and 108B. Figures 19F and 20F illustrate, respectively, the two different types of special teeth 108A and 108B after excess resin 112 has been trimmed from the teeth 108A and 108B.

The first type of special teeth 108A, illustrated in Figures 19A through 19F, is provided with short sides 244S. The short sides 242S on the special teeth 108A are not full height. One advantage in using this first type of special teeth 108A is that it prevents the short sides 242S of the special teeth 108A from interfering with molding of the resin 112 by the upper lingual cusps 136, thereby producing a better fit between the occlusal surfaces 106 of the lower posterior teeth 126L and occlusal surfaces 106' of the upper posterior teeth 126U. However, because an interface 244, illustrated in Figure 19F, is created between the shortened sides 242S of this first type of special teeth 108A and the resin 112 and because that interface 244 could be visible along the buccal aspect 246 of the tooth 108A, use of this first type of special teeth 108A may not be as esthetically desirable as use of the second type of special teeth 108B.

The second type of special teeth 108B is illustrated in Figures 20A through 20F. This second type of special teeth 108B has the advantage of having a side wall 242F of full height. Use of special teeth 108B with side walls 242F of full height is esthetically desirable because the interface 244F between the resin 112 and the full wall 242F of the tooth 108B occurs on the occlusal surface 106, as illustrated in Figure 20F, and therefore is not as visible as the interface 244S for the tooth 108A that occurs on the buccal aspect 246 of the tooth 108A, as illustrated in Figure 19F. However, this second type of special teeth 108B have the disadvantage of having full height side walls 242F that can engage the upper lingual cusps 136 during the process of molding the occlusal surfaces 106 and can thus interfere with the precise molding of the resin 112 by the upper lingual cusps 136, resulting in an occlusal surface 106 that may not be as perfectly mating to the occlusal surfaces 106' of the opposing teeth 126U as when the first type of special tooth 108A is employed.

Because the occlusal surfaces 106 of the special teeth 108 have been custom created to match the opposing teeth 126U of the patient, the upper and lower posterior teeth 126U and 126L and will achieve contact of the posterior teeth in all eccentric closed positions of the mandible 162. The resulting custom made matching occlusal surfaces 106 of the lower posterior teeth 126L and the mating occlusal surfaces 106' preformed on the stock upper posterior teeth 126U cause the dentures 100 to have better balanced occlusion preventing the dentures 100 from rocking from side to side or tipping anterior to posterior in the patient's mouth 140. Thus, a custom made set of posterior denture teeth created by the present method will function in the patient's mouth 140 better. These dentures 100 will be more comfortable in the patient's mouth 140 and will feel more natural than dentures made by any other current method.

### Other uses

This method has been described above as being used to create complete dentures 100, as illustrated in Figures 1 through 18. However, this method can also be used to create a single upper or lower complete denture for a patient that has full natural or restored natural dentition in the opposing jaw, as illustrated in Figures 21A, 21B and 22 for a patient with full maxillary dentition 248 and as illustrated in Figures 25A, 25B, and 26 for a patient with full mandibular dentition 250. In both cases, a record base 252A or 252B is created for removable attachment to the patient's natural or restored dentition 248 or 250. Then, for the maxillary record base 252A, the central bearing plate assembly 188 and central bearing plate 118 are attached to the maxillary record base 252A, as illustrated in Figure 22. Alternately, for the mandibular record base 252B, the central bearing pin assembly 192 and central bearing pin 174 are attached to the mandibular record base 252B, as illustrated in Figure 26. Thus, the record base 252A or 252B, when secured to the patient's natural or restored dentition 248 or 250, serves as a means of attaching the central bearing device 116 to the patient's natural teeth 248 or 250. From this point, the intraoral technique can be employed to create the occlusal surfaces 106 for the patient's opposing denture 104 or 102 in the manner previously described in association with creation of a complete set of dentures 100.

This method can further be used to create a denture 102 or 104 when the patient has a partial denture 254 on the opposing jaw, as illustrated in Figures 23A, 23B, and 24 for a patient with a partial maxillary denture 254A. A central bearing device 116 attached to the palatal aspect of the maxillary partial denture 254A. The removable partial denture and central bearing plate assembly are removably secured to the patient's natural or restored dentition 248, as illustrated in Figure 24. From this point, the intraoral technique can be employed to create occlusal surfaces 106 on the patient's opposing denture 104 according to the intra oral technique previously described.

Although not illustrated, this method can also be used to create a maxillary denture when the patient has a mandibular partial denture, and can be used to create the occlusal surfaces on a either a fixed partial denture or a crown.

## Claims

1. A method for establishing balanced occlusion in dentistry comprising;
installing at least one special tooth (108) as posterior teeth in one denture of a dental prosthesis (102) with each special tooth provided with a receptacle that opens in the direction of opposing teeth and an undercut area (132) in the receptacle **characterised by** the steps of;
installing the denture in identical physical relationship to the physiology of the patient's mouth for whom the dental prosthesis is being created,
inserting synthetic resin (112) into the receptacle (110) and the undercut area (132) of each of the special teeth in excess of the amount needed to completely fill the receptacle,
installing a central bearing device (116) to the denture so that the central bearing device holds the denture the proper distance apart from the opposing teeth for the physiology of the patient's mouth and allows the denture to move relative to the opposing teeth at an orientation that matches movement created by the physiology of the patient's mouth;
closing the denture while holding the denture the proper distance apart from the opposing teeth for the physiology of the patient's mouth and moving the denture in all eccentric positions relative to the opposing teeth at an orientation that matches movement created by the physiology of the patient's mouth to mold the resin (112) into mating occlusal surfaces for the special teeth (108) by using the opposing teeth as a molding instrument,
allowing the resin (112) to cure, and trimming excess resin from the special teeth.

2. A combination for use in dentistry comprising:
a special tooth (108) for insertion into a dental prosthesis, said tooth provided with sides to form a receptacle (110) located centrally between the sides and at least one undercut area in the receptacle;
moldable resin (112) filling the receptacle and the undercut area which cures to a solid to form an occlusal surface of the special tooth,
means to establish vertical spacing between a maxillary and mandibular of said dental prosthesis with a central bearing device (116) so that the contour of said occlusal surface conforms to and can be molded by interaction with opposing teeth.

## Patentansprüche

1. Verfahren zur Entwicklung einer neutralen Bisslage in der Zahnmedizin, umfassend:
Einsetzen von wenigstens einem speziellen Zahn (108) als Seitenzähne in einer Prothese einer Zahnprothese (102), wobei jeder spezielle Zahn mit einer Aufnahme, die in Richtung der gegenüberliegenden Zähne mündet, und einem Hinterschnittbereich (132) in der Aufnahme versehen ist, **gekennzeichnet durch** die folgenden Schritte:
Einsetzen der Prothese in mit der Physiologie des Mundes des Patienten, für welchen die Zahnprothese geschaffen wird, identischer physischer Beziehung,
Eingeben von Kunstharz (112) in die Aufnahme (110) und den Hinterschnittbereich (132) jedes der speziellen Zähne in einer größeren als der zum vollständigen Füllen der Aufnahme erforderlichen Menge,
Anbringen einer zentralen Lagervorrichtung (116) an der Prothese, so dass die zentrale Lagervorrichtung die Prothese im für die Physiologie des Mundes des Patienten richtigen Abstand von den gegenüberliegenden Zähnen auseinanderhält und die Prothese sich mit einer Ausrichtung, die mit der von der Physiologie des Mundes des Patienten erzeugten Bewegung übereinstimmt, relativ zu den gegenüberliegenden Zähnen bewegen lässt,
Schließen der Prothese, während die Prothese im für die Physiologie des Mundes des Patienten richtigen Abstand von den gegenüberliegenden Zähnen auseinander gehalten wird, und Bewegen der Prothese mit einer Ausrichtung, die mit der von der Physiologie des Mundes des Patienten erzeugten Bewegung übereinstimmt, in alle exzentrischen Positionen relativ zu den gegenüberliegenden Zähnen, um das Harz (112) zu passenden okklusalen Oberflächen für die speziellen Zähne (108) zu formen, indem die gegenüberliegenden Zähne als Formgebungsinstrument verwendet werden,
Aushärtenlassen des Harzes (112) und Wegschneiden von überschüssigem Harz von den speziellen Zähnen.

2. Kombination zur Verwendung in der Zahnmedizin, umfassend:
einen speziellen Zahn (108) zum Einsetzen in eine Zahnprothese, wobei der genannte Zahn mit Seiten zum Bilden einer Aufnahme (110), die mittig zwischen den Seiten liegt, und wenigstens einem Hinterschnittbereich in der Aufnahme versehen ist,
die Aufnahme und den Hinterschnittbereich füllendes, formbares Harz (112), das zu einer okklusalen Oberfläche des speziellen Zahns fest aushärtet,
Mittel zum Festlegen der vertikalen Beabstandung zwischen einer Oberkiefer- und einer Unterkieferprothese der genannten Zahnprothese mit einer zentralen Lagervorrichtung (116), so dass die Kontur der genannten okklusalen Oberfläche den gegenüberliegenden Zähnen entspricht und durch Wechselwirkung mit diesen geformt werden kann.

## Revendications

1. Méthode d'établissement d'une occlusion équilibrée en dentisterie, qui comprend :
installation d'au moins une dent spéciale (108) comme dents postérieures dans une moitié d'une prothèse dentaire (102), chaque dent spéciale étant pourvue d'un réceptacle qui s'ouvre dans la direction des dents opposées et d'une zone dépouillée (132) dans le réceptacle, la méthode étant **caractérisée par** les étapes consistant à :
installer la prothèse dentaire en une relation physique identique à la physiologie de la bouche du sujet pour lequel la prothèse dentaire est en cours de création,
introduire, dans le réceptacle (110) et la zone dépouillée (132) de chacune des dents spéciales, une résine synthétique (112) en une quantité supérieure à celle qui est nécessaire pour remplir complètement le réceptacle,
installer un dispositif d'appui central (116) dans la prothèse de telle sorte que le dispositif d'appui central maintient la prothèse à la distance appropriée des dents opposées compte tenu de la physiologie de la bouche du sujet et permet à la prothèse de se déplacer relativement aux dents opposées selon une orientation qui correspond au mouvement créé par la physiologie de la bouche du sujet ;
refermer la prothèse tout en la maintenant à la distance appropriée des dents opposées en fonction de la physiologie de la bouche du sujet, et déplacer la prothèse vers toutes les positions excentriques relativement aux dents opposées selon une orientation qui correspond au mouvement créé par la physiologie de la bouche du sujet, pour mouler la résine (112) afin qu'elle corresponde aux surfaces d'occlusion des dents spéciales (108) en utilisant les dents opposées comme instrument de moulage,
laisser sécher la résine (112) et éliminer la résine en excédent des dents spéciales.

2. Combinaison pour utilisation en dentisterie, comprenant :
une dent spéciale (108) à introduire dans une prothèse dentaire, ladite dent étant pourvue de côtés qui forment un réceptacle (110) placé centralement entre les côtés et au moins une zone dépouillée prévue dans le réceptacle ;
une résine moulable (112) qui remplit le réceptacle et la zone dépouillée et qui durcit jusqu'à former un solide pour constituer une surface d'occlusion de la dent spéciale,
des moyens pur établir un écartement vertical entre un maxillaire supérieur et un maxillaire inférieur de ladite prothèse dentaire avec un dispositif de support central (116 de sorte que le contour de ladite surface d'occlusion soit conforme aux dents opposées et puisse être moulé par interaction avec celles-ci.
